(19) **Europäisches Patentamt**

**European Patent Office**

**Office européen des brevets**

(11) Numéro de publication: **0 370 577 B1**

(12) **FASCICULE DE BREVET EUROPEEN**

(45) Date de publication de fascicule du brevet: **20.04.94**

(51) Int. Cl.5: **G02F 1/015**, G02F 1/29, G02F 1/025, G02F 1/295

(21) Numéro de dépôt: **89202940.6**

(22) Date de dépôt: **20.11.89**

(54) **Dispositif semiconducteur intégré incluant un élément optoélectronique de commutation.**

(30) Priorité: **25.11.88 FR 8815426**
**30.12.88 FR 8817497**

(43) Date de publication de la demande:
**30.05.90 Bulletin 90/22**

(45) Mention de la délivrance du brevet:
**20.04.94 Bulletin 94/16**

(84) Etats contractants désignés:
**DE FR GB IT SE**

(56) Documents cités:
**EP-A- 0 233 011**

**ELECTRONICS LETTERS, vol. 20, no. 6, 15 mars 1984, pages 228-229; O. MIKAMI et al.: "Waveguided optical switch in InGaAs/InP using free-carrier plasma dispersion"**

**IEEE ELECTRON DEVICE LETTERS, vol. EDL-7, no. 11, novebre 1986, pages 605-606; K. TADA et al.: "Biopolar Transistor Carrier-Injected Optical Modulator/Switch: Proposal and Analysis"**

(73) Titulaire: **LABORATOIRES D'ELECTRONIOUE PHILIPS**
**3, Avenue Descartes**
**F-94450 Limeil-Brévannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB IT SE**

(72) Inventeur: **Erman, Marko**
**Société Civile S.P.I.D.**
**209 rue de l'Université**
**F-75007 Paris(FR)**
Inventeur: **Autier, Philippe**
**Société Civile S.P.I.D.**
**209 rue de l'Université**
**F-75007 Paris(FR)**

(74) Mandataire: **Landousy, Christian et al**
**Société Civile S.P.I.D.**
**156, Boulevard Haussmann**
**F-75008 Paris (FR)**

Rank Xerox (UK) Business Services
(3.10/3.09/3.3.3)

EXTENDED ABSTRACTS OF 48TH ANNUAL MEETING, JAPAN SOCIETY OF APPLIED PHYSICS, no. 3, 1987, 18p-ZG-2, page 721; H. INOUE et al.: "InGaAsP/InP Carrier-Injection Type Y-branch Optical Switches"

EXTENDED ABSTRACTS OF 48TH ANNUAL MEETING, JAPAN SOCIETY OF APPLIED PHYSICS, 1987, no. 3, 18p-ZG-3, page 721; H. NAKEMURA et al.: "InGaAsP/InP Carrier-Injection Type 4x4 Optical Switches"

## Description

L'invention concerne un dispositif semiconducteur intégré incluant au moins un élément optoélectronique de commutation, cet élément comprenant au moins une hétérostructure de couches de matériaux III-V incluant un substrat S et une couche guidante CG pour former des guides de lumière avec un ruban de guidage RB, dont :
- au moins un guide d'entrée G1 rectiligne, pour l'introduction d'un signal lumineux,
- un premier guide de sortie G'1, rectiligne, dans le prolongement du guide d'entrée G1,
- un second guide de sortie G'2 rectiligne, couplé avec le premier guide de sortie G'1 en faisant avec ce dernier un angle donné (2θ) dans une région dite de commutation, cet élément comprenant en outre, dans cette région de commutation pour former un élément de réflexion du signal vers le second guide G'2 d'entrée :
- une jonction p-n formée d'une première couche C1, dite inférieure, d'un premier type de conductivité, et d'une seconde couche C2, dite supérieure, du type de conductivité opposé, disposée de part et d'autre de la couche guidante et de manière adjacente à celle-ci, la seconde couche C2 supérieure s'étendant de manière dissymétrique par rapport au plan bissecteur YY' longitudinal de l'angle 2θ des guides de sortie G'1, G'2, sur la demi région délimitée par ce plan qui comprend le premier guide de sortie G'1, cette couche supérieure C2 ayant un bord BB' en coïncidence avec ce plan bissecteur, et ayant une dimension, dans cette direction longitudinale, égale ou supérieure à deux fois celle de la région de commutation et débordant sensiblement symétriquement de part et d'autre de cette région de commutation.

L'invention trouve son application dans la réalisation de matrices de commutation optique de N guides dans N guides, pour les systèmes optoélectroniques en télécommunications.

L'invention concerne également une matrice de commutation réalisée au moyen de ces éléments et un procédé de réalisation d'un dispositif semiconducteur incluant une telle matrice.

Un premier élément de commutation est déjà connu de l'état de la technique par la publication de "ELECTRONICS LETTERS, p.228-229, vol.20, N°6, 15th March 1984, intitulée "WAVEGUIDED OPTICAL SWITCH IN InGaAs/InP USING FREE-CARRIER PLASMA DISPERSION". Ce document décrit un élément opto-électronique de commutation comprenant une hétérostructure de couches de matériaux III-V incluant un substrat et une couche guidante. Dans la couche guidante sont formés deux guides de lumière, couplés pour former un X. La lumière est guidée par des rubans de guidage disposés à la surface des guides. Pour obtenir la formation d'un plasma de porteurs libres, approprié à créer un changement de l'indice de réfraction du matériau de guidage dans la région de couplage, une jonction p-n est appliquée à cette région. Par ce moyen on produit une réflexion du faisceau d'entrée au niveau de l'interface avec la région d'indice changé. Les guides ont une dimension transversale de 15 μm et se croisent sous un angle 2θ = 3°. La jonction est formée de deux couches, une couche supérieure de type p disposée à la surface supérieure de la région de couplage et une couche inférieure de type opposé n constituée par la totalité du substrat lui-même. Ces couches n et p sont situées de part et d'autre de la couche guidante et de manière adjacente à cette dernière. La couche supérieure de type p est disposée sur la jonction de manière dissymétrique par rapport au plan bissecteur de l'angle 2θ, avec un bord en coïncidence avec ce plan bissecteur. La dimension de cette couche p et de l'électrode de contact supérieure est de 1290 x 30 μm, excédant par sa grande dimension la dimension longitudinale de la région de croisement.

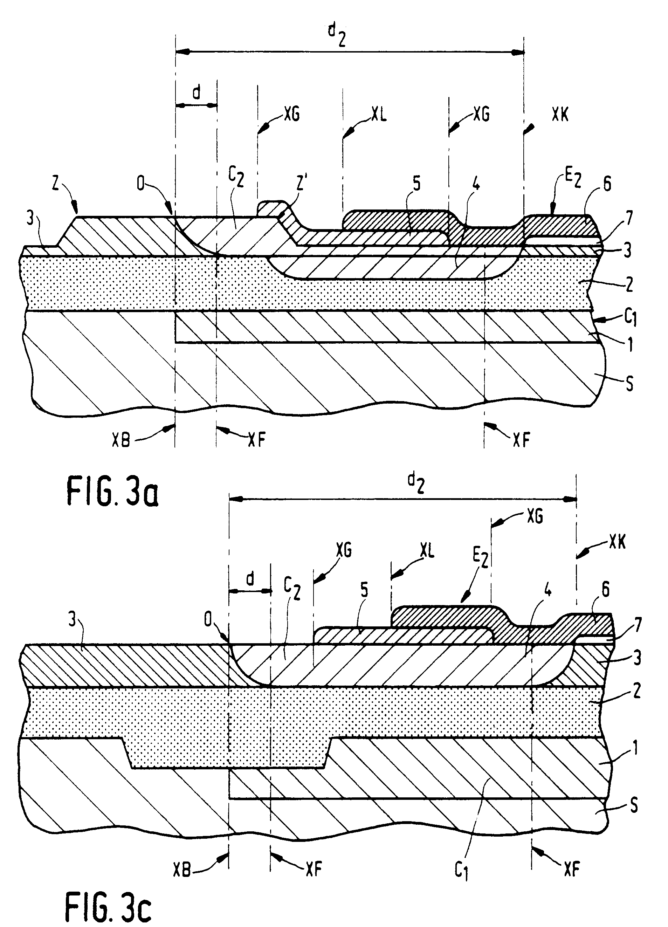

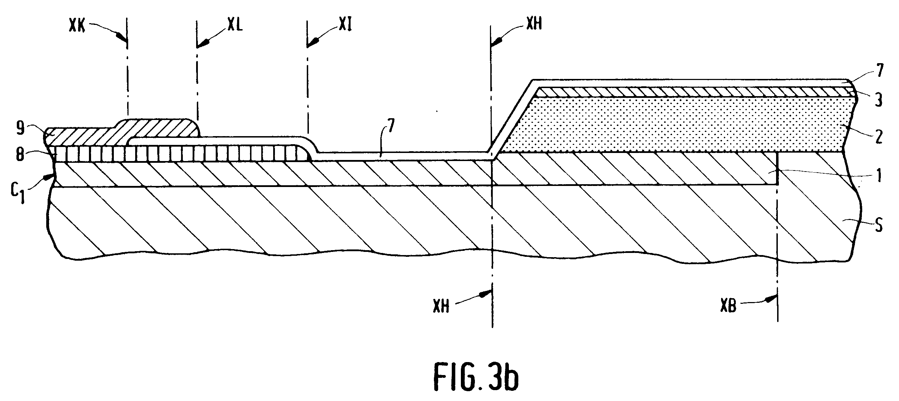

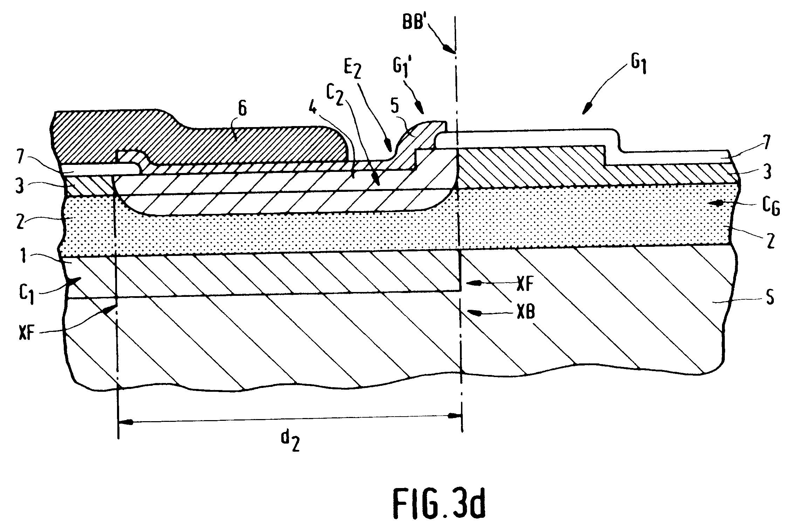

La FIG.3 du premier document cité enseigne que lorsque la jonction est à l'état passif, l'intensité de sortie mesurée sur le guide situé dans le prolongement d'une branche du X choisie comme guide d'entrée est de 40 % de l'intensité d'entrée, et l'élément de commutation est sensiblement dans un état dit intermédiaire. En actif, il existe une valeur du courant injecté dans la jonction p-n qui produit un minimum d'intensité dans la sortie directe, correspondant avec un maximum dans le guide dévié. La puissance de sortie dans la guide direct peut changer d'un facteur 2 par variation du courant d'injection.

Un autre élément de commutation est aussi connu de l'état de la technique par la demande de brevet EP-A2-0 233 011. En référence avec les FIG. 6A et 6B de ce document, l'élément de commutation est, comme le précédent, en forme de X, avec une jonction p-n comme dans le cas précédemment cité, la couche supérieure de la jonction est dissymétrique avec un bord aligné avec le plan bissecteur du petit angle du X. Lorsqu'un signal électrique alternatif est appliqué sur la jonction, et qu'un signal lumineux est appliqué sur une des branches du X, les sorties de l'élément de commutation ont la même forme que celle du signal électrique alternatif et sont en opposition de phase.

Un troisième élément de commutation est connu du brevet US 4 784 451. Ce document décrit divers éléments de commutation du type à injection de porteurs, et dont le fonctionnement est amélioré par la présence d'une structure de restriction de courant. Ces éléments de commutation comprennent deux tronçons de guide d'onde faisant entre eux un angle donné. Ces guides sont intégrés sur un substrat et sont formés d'une couche guidante disposée entre deux couches de confinement, lesquelles sont en un matériau de plus grande largeur de bande interdite et de plus faible indice de réfraction.

L'une des couches de confinement est d'un type de conductivité, et la couche guidante est du type de conductivité opposé pour former une jonction p-n. D'autre part dans chacune des couches de confinement, sont implantés des ions Zn pour former la structure de restriction de courant. Cette structure délimite une zone dans la couche guidante où l'indice est changé par l'injection des porteurs de charge.

Dans un exemple de réalisation l'élément de commutation présente, vu du dessus, la forme d'un Y. La jonction p-n est réalisée en travers d'un guide rectiligne à une extrémité duquel se fait l'entrée et à l'autre extrémité duquel se fait la sortie en mode passif, la sortie se faisant par une seconde branche du Y en mode actif. Dans ce dernier mode, par changement d'indice dans la zone de la couche guidante, la lumière qui entre à l'extrémité dite entrée du guide rectiligne est réfléchie vers la seconde branche du Y.

L'une des électrodes qui commande la commutation est disposée de manière dissymétrique en surface du Y, avec un de ses bords aligné avec la bissectrice de l'angle des deux branches de sortie. Cette électrode ne déborde pas au-delà de la largeur des guides.

La structure de restriction de courant est telle qu'elle présente deux zones implantées dans la partie supérieure du substrat et séparée par une distance environ égale à la dimension tranversale de l'électrode supérieure, et qu'elle présente en outre une zone implantée dans la couche supérieure de confinement et localisée sensiblement sous l'électrode supérieure. L'électrode inférieure est disposée sur la face opposée du substrat, ce dernier étant conducteur. La lumière est guidée du fait qu'un mesa est formé en surface du substrat, incluant la couche guidante et les couches supérieures.

Dans un autre exemple de réalisation décrit dans le même document cité, l'élément de commutation a la forme d'un X. L'électrode supérieure présente la forme d'un ruban disposé parallèlement à la bissectrice du petit angle de raccordement des branches de l'X. Dans ce cas le substrat est muni à sa surface d'une couche d'un type de conductivité opposé à celui de la couche guidante et qui a la forme d'un ruban disposé selon le même axe que l'électrode supérieure, c'est-à-dire parallèlement à la bissectrice de l'angle de raccordement des branches de l'X. Comme cette couche affleure la partie supérieure du substrat, des électrodes d'un type de conductivité opposé à celui de l'électrode supérieure sont disposées à chaque extrémité de ladite couche. Une région implantée au moyen d'ions Zn est disposée sensiblement sous l'électrode supérieure dans la couche de confinement supérieure. L'électrode supérieure a une longueur inférieure à celle de la diagonale de la jonction. Elle est disposée d'une manière symétrique sur l'élément en forme de X et sa dimension latérale est non négligeable. La partie inférieure de la structure de restriction de courant n'inclut pas dans ce cas de région implantée d'ions Zn dans le substrat qui est semi-isolant, du fait de la présence du ruban d'un premier type de conductivité munie des électrodes à chacune de ses extrémités.

Ces structures présentent principalement le défaut que la surface réfléchissante formée par la région d'indice modifiée, due à l'injection de porteurs de charge au moyen de la jonction p-n, n'est pas de suffisamment grande dimension pour recueillir tous les rayons incidents et pour les réfléchir. Il en résulte la fuite d'une onde évanescente à chaque extrémité de la région centrale de l'élément de commutation, notamment en actif.

De plus, les différentes régions de la structure de restriction de courant sont seulement approximativement alignées du fait qu'elles sont réalisées par implantation ionique de Zn à deux niveaux. Par cette méthode il est très difficile d'aligner le bord d'une seconde région à un niveau supérieur. Le plan réfléchissant est donc seulement approximativement disposé.

Un inconvénient des éléments de commutation connus, pour l'application présente aux télécommunications, est qu'ils ne sont pas monomodes. En particulier, même si l'on transpose les dimensions de ces éléments pour obtenir la propagation d'une onde monomode dans le(les) guide(s) d'entrée, la disposition de l'électrode supérieure dans l'élément en X admet l'excitation de modes compliqués. En effet, les plans réflecteurs ne coïncident pas avec la bissectrice de l'angle de raccordement, ce qui est optiquement mauvais en réflexion. D'où il résulte aussi des pertes en actif.

D'autre part, les guides de lumière des dispositifs connus sont composés d'une couche guidante disposée dans un mesa entre deux couches de confinement. Une telle structure est sujette à des pertes par diffusion latérale à travers les parois, qui sont très importantes.

On notera encore que l'adoption d'un substrat de type n est non seulement un inconvénient pour la réalisation d'une structure de restriction de courant mais est aussi un inconvénient pour la réalisation de dispositifs optoélectroniques en synergie de fabrication avec celle d'autres éléments actifs intégrés, tels que des transistors à effet de champ.

Les dispositifs connus sont donc loin d'être optimisés tant en actif qu'en passif.

On prendra alors en compte que, pour les applications aux télécommunications, il faut être en mesure de réaliser des matrices de commutation travaillant aux longueurs d'onde 1,3 ou 1,55 μm, transportant des signaux monomodes, et présentant un grand nombre d'éléments de commutation. Aussi des pertes qui peuvent sembler faibles lorsque l'on considère un seul élément de commutation deviennent-elles rédhibitoires lorsque l'on met en oeuvre une matrice entière.

C'est pourquoi, un des objets de l'invention est de fournir un élément de commutation dont les performances sont améliorées aussi bien en transmission, c'est-à-dire lorsque la jonction est passive, qu'en commutation, c'est-à-dire lorsque la jonction est active, de manière à ce que les pertes soient diminuées, c'est-à-dire que la puissance de sortie soit aussi voisine que possible de la puissance d'entrée ; de manière à ce que l'extinction sur la voie de sortie non utilisée soit au moins égale à 30 dB ; et de manière à permettre ainsi d'obtenir des sorties équilibrées ce qui est particulièrement important pour l'application à une matrice entière.

Un objet de l'invention est donc de fournir un élément de commutation réellement monomode, qui lors de l'application d'une densité de courant sur la jonction p-n, permette d'obtenir par injection de porteurs de charge une diminution réellement abrupte de l'indice de réfraction dans la région de jonction, résultant en la formation d'un plan réflecteur bien localisé, de manière à permettre la réflexion interne totale d'un faisceau introduit dans le guide situé dans la zone opposée à la zone occupée par la jonction, dans le prolongement du guide adjacent.

Les autres objets de l'invention sont de fournir un élément de commutation dont le procédé de fabrication est en synergie avec celui d'autres circuits intégrés, c'est-à-dire dont le substrat peut être semi-isolant ; qui est réellement monomode ; dont les dimensions sont réduites et conduisent donc à des matrices de commutation de faible surface particulièrement favorable à l'intégration à haute densité ; qui est d'une mise en oeuvre simple et donc d'un coût réduit.

Ces buts sont atteints au moyen d'un élément de commutation tel que décrit dans le préambule et en outre caractérisé en ce que, pour réaliser une structure de restriction de courant faisant coïncider exactement l'élément de réflexion avec ledit plan bissecteur, pour la réflexion totale du signal d'entrée vers le second guide de sortie G'2 en actif, la première couche inférieure C1 de la jonction p-n est également une couche dissymétrique par rapport audit plan bissecteur, avec un bord BB' en coïncidence avec celui de la seconde couche C2 supérieure, et cette première couche inférieure C1 s'étend sous la seconde couche C2 avec une surface au moins égale à celle de cette dernière.

Dans ces conditions, les pertes par évanescence à chaque extrémité de la région de croisement sont évitées.

En outre, la structure de restriction de courant est plus performante que la structure connue du document cité. De plus, comme elle est disposée rigoureusement en coïncidence avec le plan de symétrie de l'angle de croisement, le plan réflecteur se trouve dans une position optique idéale pour produire la réflexion totale interne en une seule réflexion. On rappelle que dans le second exemple de réalisation du troisième document cité, les plans réflecteurs dus à la jonction p-n étaient décalés latéralement par rapport au plan bissecteur.

Par ailleurs, le dispositif selon l'invention est en synergie de fabrication avec d'autres dispositifs actifs du fait du substrat semi-isolant.

Dans une mise en oeuvre de l'invention, ce dispositif est caractérisé en ce que, pour réaliser une structure de confinement du signal lumineux dans le premier guide de sortie G'1 pour la transmission totale du signal lumineux d'entrée vers ce premier guide G'1 en passif, le ruban de guidage est de section rectangulaire, et en ce qu'un sillon à faces parallèles est formé dans le ruban de guidage du second guide de sortie G'2, à la jonction du premier et du second guides de sortie G'1, G'2, par élimination du matériau de ce ruban de guidage sur toute sa hauteur, et avec une dimension transversale d3 non nulle, perpendiculairement au plan des couches et parallèlement à l'axe de propagation du premier guide de sortie G'1.

Cette mise en oeuvre permet de minimiser les pertes dans l'élément de commutation en transmission lorsque la jonction est passive.

Dans une mise en oeuvre, ce dispositif est caractérisé en ce qu'il comprend une seconde hétérostructure, composée de la couche guidante CG et d'une couche supérieure en un matériau de confinement.

Cette mise en oeuvre permet de minimiser les pertes dans chaque tronçon de guide qui relie un élément à un autre pour constituer une matrice entière.

Dans une mise en oeuvre, ce dispositif est caractérisé en ce que le ruban de guidage est érigé au-dessus de l'hétérostructure.

Dans ces conditions, on pourra obtenir à la fois des guides étroits donc rigoureusement monomodes, un plan réflecteur extrêmement bien localisé, et un coefficient de transmission équivalent sur l'un ou l'autre des guides de sortie, dans les cas où la jonction est respectivement active ou passive.

Dans une mise en oeuvre préférentielle, le substrat et la couche de confinement supérieure sont en InP, la couche guidante est en $Ga_xIn_{1-x}As_yP_{1-y}$ dans laquelle :

$y \simeq 0,5$

$x = 0,435\,y$

$e_G \simeq 4\ \mu m$ (épaisseur de la couche guidante)

$a = 0,4\ \mu m$ (dimension transversale du ruban des guides)

$2\theta \simeq 4°$ (angle de croisement)

$e_3 \simeq 0,25$ à $0,60\ \mu m$ (épaisseur de la couche de confinement supérieure en dehors du ruban)

$H = h + e_3 \simeq 1\ \mu m$ (épaisseur de matériau de confinement dans la région du ruban R)

Dans ces conditions, il se trouve que ces valeurs sont optimales aussi bien en actif qu'en passif. Le faisceau n'a pas tendance à se partager entre les deux guides de sortie en passif, comme en actif. L'élément de commutation est véritablement optimisé dans l'un et l'autre de ses modes de fonctionnement.

L'invention sera mieux comprise au moyen de la description suivante, illustrée schématiquement par les figures annexées dont :

- les figures 1a et 1b qui représentent un élément en forme de X vu du dessus qui est décrit dans l'exemple I ;
- la figure 1c qui représente un élément de commutation en forme de Y, décrit dans l'exemple II, vu du dessus ;
- la figure 1d qui représente le trajet des faisceaux dans un élément tel que celui de la figure 1c ;
- la figure 1e qui représente une cellule unitaire CL de commutation de deux guides dans deux guides, formée de quatre éléments en forme de Y, vue du dessus, décrite dans l'exemple II ;
- les figures 2a à 2c qui représentent chacune une coupe des figures 1a, 1b selon l'axe II-II, dans des modes de réalisation de la structure de confinement de la lumière décrits dans l'exemple I ;
- les figures 2d et 2e qui représentent chacune une coupe selon l'axe II-II de la figure 1c, selon des modes de réalisation décrits dans l'exemple II ;
- la figure 3a qui représente une coupe selon l'axe I-I de la figure 1a, dans le mode de réalisation illustré par la figure 2b et décrit dans l'exemple I ;
- la figure 3b qui représente une coupe selon l'axe III-III de la figure 5a dans le mode de réalisation illustré par les figures 2b ou 2e, et décrit dans les exemples I et II ;
- la figure 3c qui représente une coupe selon l'axe I-I de la figure 1a, dans un mode de réalisation de la figure 2c décrit dans l'exemple I ;
- la figure 3d qui représente une coupe selon l'axe I-I de la figure 1c dans le mode de réalisation illustré par la figure 2e et décrit dans l'exemple II ;
- la figure 4a qui montre les courbes donnant la valeur du coefficient de transmission, en passif, dans le prolongement du guide d'entrée (courbes A) et dans le guide de sortie adjacent (courbes B) lorsque l'angle de croisement $2\theta = 2°$, pour différentes valeurs de la largeur des guides (4 ou 5 $\mu m$), le tout en fonction de la variation d'indice entre la région guidée et les régions latérales de confinement, illustrant le fonctionnement des éléments des exemples I et II ;
- la figure 4b qui montre les variations des mêmes caractéristiques lorsque $2\theta = 4°$ pour les exemples I et II ;
- la figure 4c qui montre la variation de la différence d'indice $\Delta n$ en fonction de l'épaisseur $e_3$ de la couche de confinement supérieure et en fonction de l'épaisseur totale H de matériau de confinement au-dessus de la région guidée pour les exemples I et II ;
- la figure 4d qui montre les variations de l'épaisseur de la couche binaire de confinement $e_3$ avec la concentration y de la couche guidante quaternaire pour obtenir une différence d'indice entre les régions latérales de confinement et la région guidée $\Delta n \simeq 2.10^{-3}$ et pour différentes valeurs de l'épaisseur totale H du matériau de confinement au-dessus de la région guidée, pour les exemples I et II ;
- la figure 4e qui représente le rapport T/R en fonction de la densité de courant $D_I$ appliquée à la jonction, où T est le coefficient de transmission dans la première voie de sortie et R le coefficient de réflexion dans la seconde voie de sortie, dans un élément décrit dans l'exemple II ;
- la figure 4f qui représente les variations de la différence d'indice $\Delta n$ produite dans la jonction par la densité de courant $D_I$, dans un élément décrit dans l'exemple II ;
- la figure 5a qui montre un exemple de réalisation d'un groupe de deux éléments avec leurs électrodes, vu du dessus, décrit dans l'exemple I ;
- la figure 5b qui représente une matrice de commutation de N guides dans N guides composée d'éléments selon la figure 1a, décrite dans l'exemple I ;
- la figure 5c qui représente une matrice de commutation de N guides dans N guides composée de cellules selon la figure 1e, décrite dans l'exemple II ;

## Exemple I

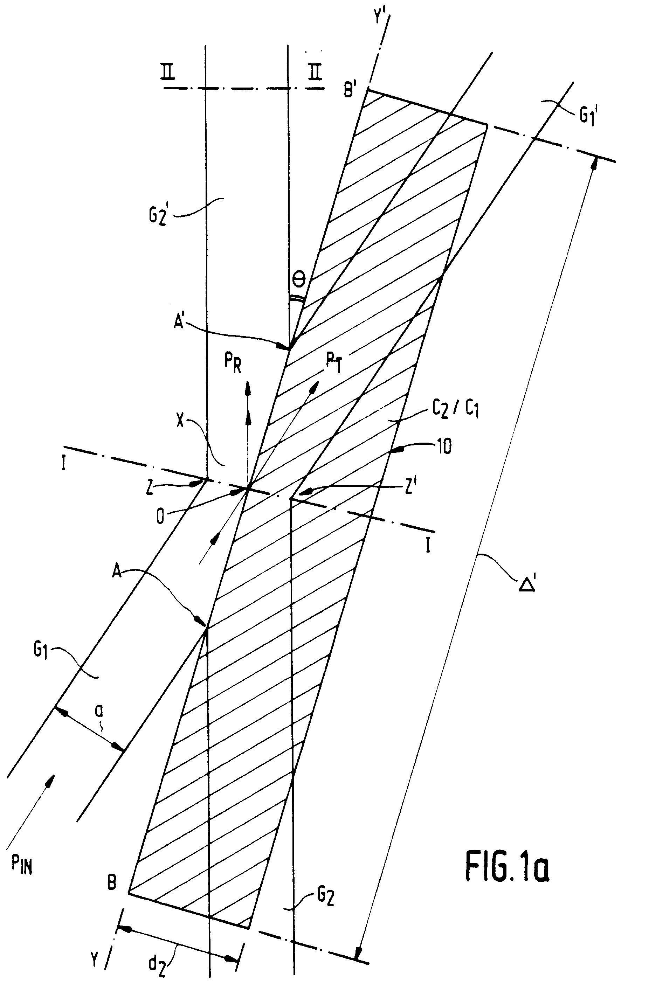

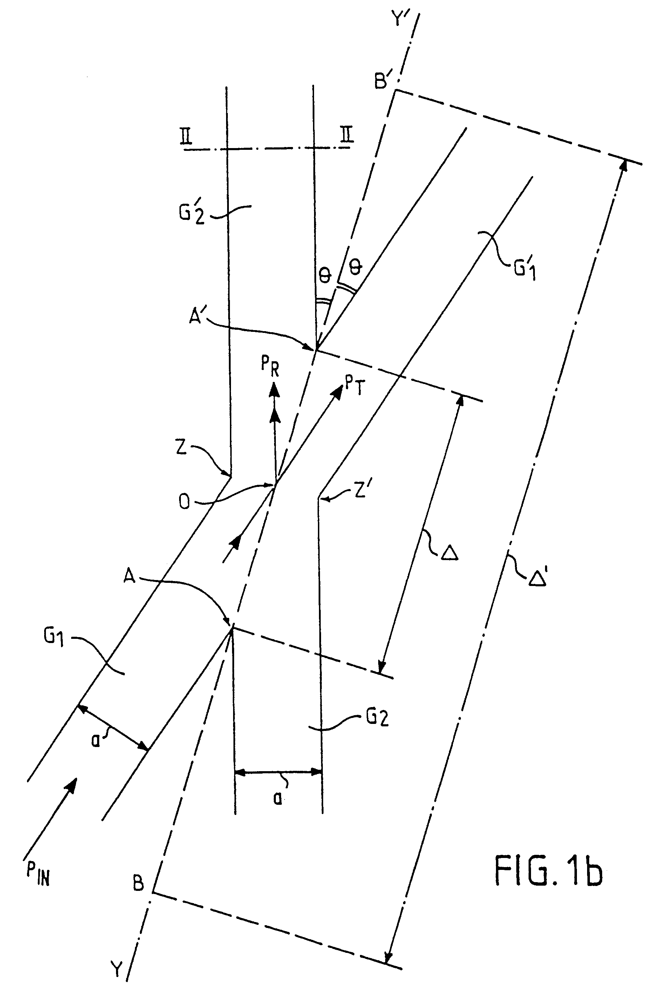

Les figures 1a et 1b illustrent schématiquement, vu du dessus, un exemple d'élément de commutation selon l'invention. Dans cet exemple, l'élément présente la forme d'un X. Cet élément comprend deux guides de lumière $G_1$ et $G_2$ intégrés sur un substrat S.

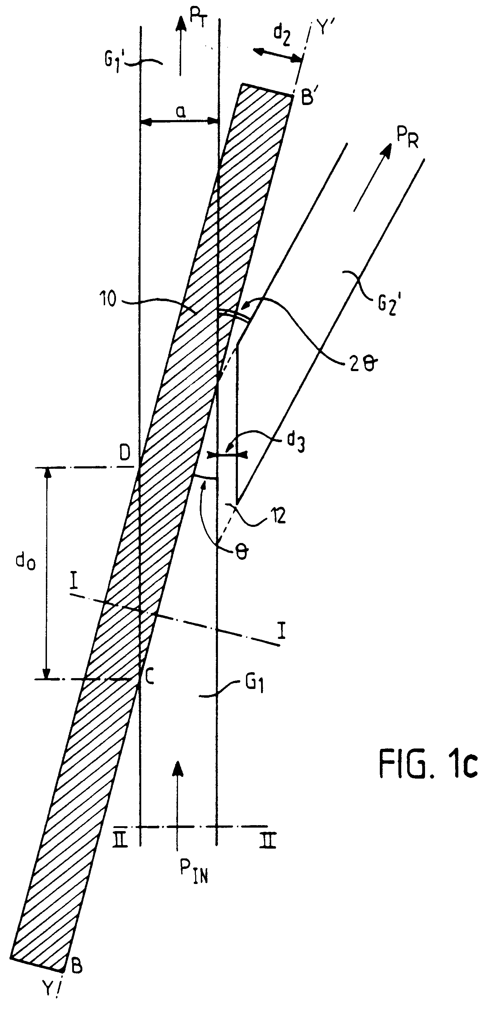

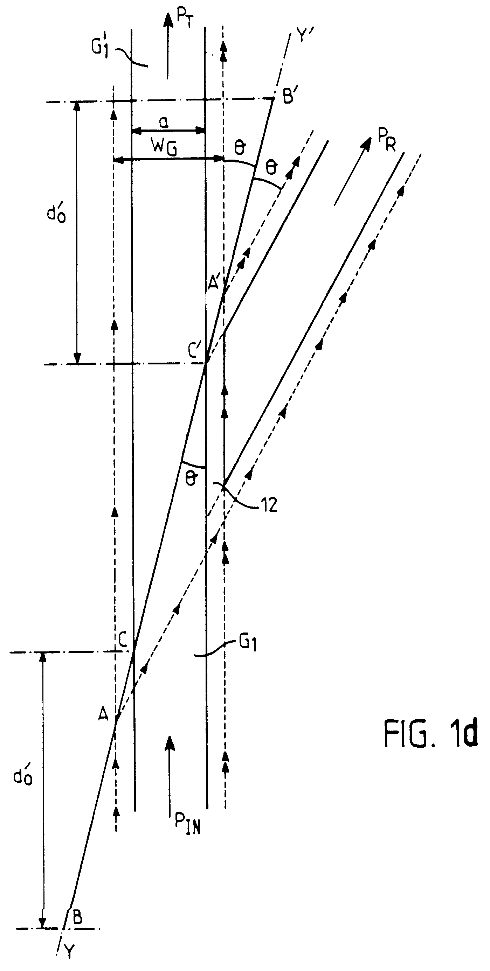

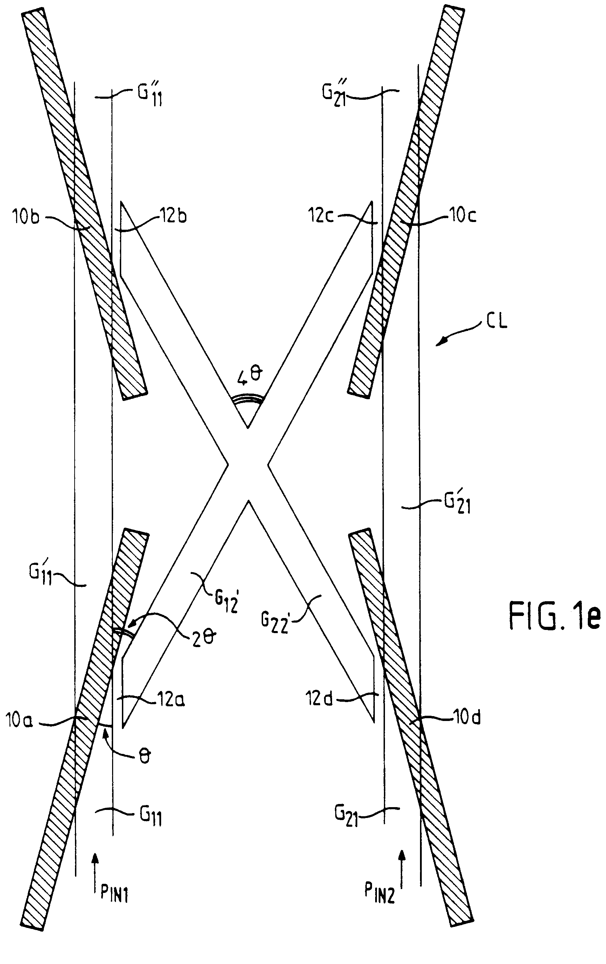

Les guides de lumière $G_1$ et $G_2$ présentent chacun une dimension transversale $\underline{a}$ et se croisent sous un angle faible $2\theta$. Par angle faible, il entendre un angle dont la valeur est inférieure à 10°. Cet angle $2\theta$ de croisement admet un plan bissecteur dont la trace est représentée par YY' sur les figures 1. La dimension transversale $\underline{a}$ de chacun des guides est choisie identique dans la description suivante pour la simplicité du procédé de réalisation.

L'invention a notamment pour but le traitement des signaux lumineux monomodes, de longeur d'onde 1,3 ou 1,55 $\mu$m, qui sont les standards actuels en télécommunications.

Tel que représenté vu du dessus sur la figure 1a, cet élément de commutation en X formé de deux guides rectilignes qui se croisent, comprend d'abord des moyens pour effectuer la commutation.

Les moyens pour effectuer la commutation consistent en la formation d'un plan réflecteur BB' disposé en coïncidence exacte avec le plan bissecteur YY' de l'angle de croisement $2\theta$.

Ce plan réflecteur est obtenu par la création, dans l'une des deux régions de la zone de croisement délimitée par le plan bissecteur, d'une variation abrupte de l'indice de réfraction, et plus exactement d'une diminution suffisante de l'indice de réfraction pour provoquer la réflexion totale interne d'une faisceau provenant de la zone opposée et arrivant sur l'interface BB' créée par cette différence d'indice sous un angle d'incidence $\frac{\pi}{2} - \theta$).

Cette diminution de l'indice est obtenue par l'injection de porteurs de charges dans la région choisie, au moyen d'une jonction p-n 10 $C_2/C_1$ réalisée dans ladite région.

Lorsque la jonction 10 $C_2/C_1$ sera active, un signal entrant dans le guide $G_1$, disposé dans la zone opposée à celle de la jonction sera réfléchi par le plan réflecteur symbolisé par BB' et sortira par le prolongement $G'_2$ du guide adjacent $G_2$ désorienté d'un angle $2\theta$ par rapport à l'axe de $G_1$.

Lorsque la jonction 10 sera passive, le signal entrant dans le guide $G_1$ continuera son chemin au-delà de la région de croisement et sortira par le prolongement $G'_1$ dudit guide $G_1$.

Si les dimensions des guides $G_1$ et $G_2$ sont telles que le signal d'entrée est monomode, alors le signal de sortie sera aussi monomode puisqu'il n'existe pas, dans l'élément selon l'invention de régions élargies où des modes d'ordres supérieurs pourraient être activés.

Si le guide $G_1$ a été choisi pour transporter le signal commutable, alors le guide $G_2$ ne pourra transporter qu'un signal non commutable, c'est-à-dire qu'il ne pourra transporter qu'un signal se propageant, au-delà de la région de croisement, dans son propre prolongement $G'_2$.

On verra plus loin que la structure des guides de lumière et la valeur des différents paramètres de cette structure (épaisseurs des couches, dimensions transversales des guides etc...) jouent aussi un grand rôle pour parvenir aux buts de l'invention.

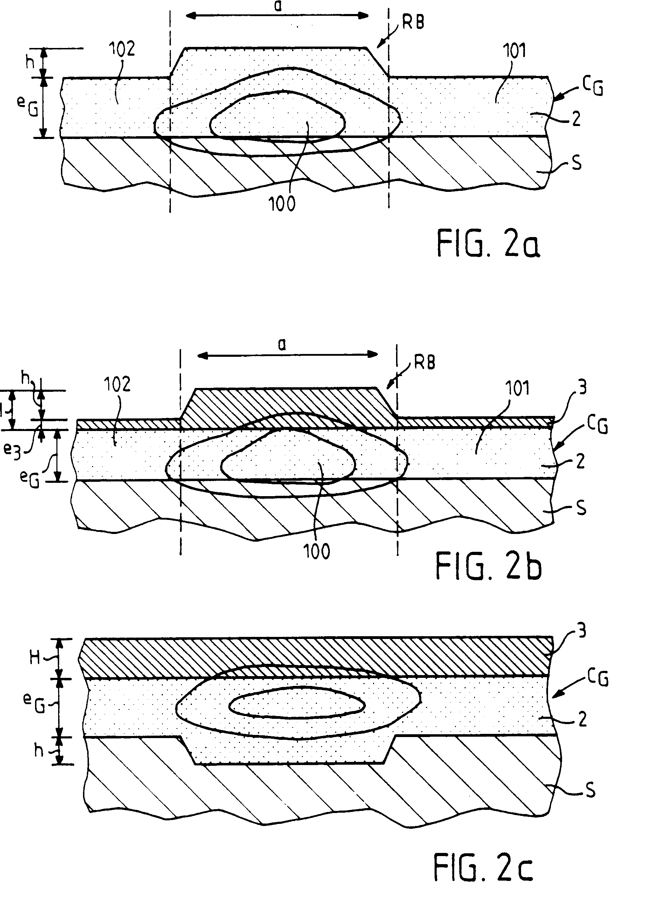

Telle que représentée sur la figure 2a qui est une coupe selon l'axe II-II de la figure 1a, la structure d'un guide de lumière particulièrement appropriée à atteindre les buts de l'invention, comprend un substrat S en un matériau de confinement, et une couche guidante $C_G$ en un matériau 2. Les matériaux constituant le substrat S et la couche guidante $C_G$ sont favorablement choisis pour former une hétérostructure. Chaque guide comprend en outre un ruban de guidage RB de section rectangulaire ou sensiblement rectangulaire, érigé d'une hauteur $\underline{h}$ au-dessus du dispositif, formé dans le matériau 2 de la couche de guidage et présentant une dimension transversale $\underline{a}$. Les flancs du ruban sont donc sensiblement parallèles entre eux et sensiblement perpendiculaires au substrat. L'angle vis-à-vis du substrat dépend du procédé de réalisation.

Dans une mise en oeuvre préférentielle de l'invention, telle que représentée en coupe selon l'axe II-II de la figure 1a, sur la figure 2b, la structure d'un guide de lumière appropriée à atteindre les buts de l'invention comprend un substrat S en un matériau de confinement, une couche guidante $C_G$ du matériau 2, et une couche supérieure 3 de confinement. De préférence, les matériaux constituant le substrat S, la couche guidante $C_G$ et la couche de confinement 3 sont choisis pour former une double hétérostructure. Chaque guide comprend en outre, comme dans le cas de la figure 2a, un ruban de guidage RB qui est ici formé dans le matériau de la couche de confinement 3.

Pour l'application envisagée, il sera favorable de choisir un substrat en un matériau III-V binaire, par exemple le phosphure d'indium InP, et une couche guidante en un matériau III-V quaternaire de composition :

$$Ga_x In_{1-x} As_y P_{1-y}$$

dans laquelle les concentrations x et y sont liées par les relations :
$$x = 0,435 \, y$$
pour chaque valeur de y.

La longueur d'onde associée à l'énergie de bande interdite est 1,22 $\mu$m si y $\simeq$ 0,5.

Les figures 2a et 2b montrent aussi les lignes iso-énergie qui permettent de comprendre comment le faisceau lumineux est guidé dans de telles hétérostructures à ruban de guidage. On constate que la section du faisceau a une forme oblongue, et que le faisceau se propage dans la direction définie par le ruban de guidage en restant essentiellement dans le couche guidante. Comme il est connu de l'homme du métier, cela est dû au fait que le matériau InP constituant le substrat S, et éventuellement la couche de conf inement 3, présente un indice de réfraction inférieur à celui de la couche $C_G$ en GaInAsP, et que les régions 101 et 102 de la couche guidante $C_G$ situées de part et d'autre du ruban de guidage RB, présentent un indice de réfraction inférieur à celui de la région 100 située sous le ruban RB, dite région guidée. La différence d'indice $\Delta$n entre les régions 101, 102 et la région guidée 100, est due à la différence d'épaisseur des couches dans ces régions, et résulte dans le fait que ces régions 101 et 102 se comportent comme si elles étaient réalisées en un matériau de confinement. Elles sont dites régions de confinement latéral.

On établira plus loin des règles portant sur les conditions de détermination des valeurs de la hauteur h du ruban de guidage RB, de sa dimension transversale a, de l'épaisseur $e_3$ de la couche de confinement supérieur, de l'épaisseur $e_G$ de la couche guidante, de la composition de la couche guidante, dans le but d'optimiser le dispositif selon l'invention à la fois lorsque la jonction est active et lorsque la jonction est passive.

En effet, une jonction p-n n'est pas suffisante pour obtenir un plan réflecteur parfait lors du fonctionnement actif, il faut adjoindre à cette jonction une structure de restriction de courant. Selon l'invention, cette structure est réalisée de façon simple et performante comme il est montré sur la figure 3a, en coupe selon l'axe I-I de la figure 1a, et correspondant à une structure de guide à double hétérostructure conforme à la figure 2b. Cette jonction p-n comprend d'une part une couche $C_1$ en un matériau 1 de type de conductivité n disposée dans la partie supérieure du substrat S qui est alors choisi semi-isolant, et d'autre part une couche $C_2$ en un matériau 4 de type de conductivité p disposée dans la partie supérieure de la couche guidante $C_G$ ou de manière adjacente à cette couche.

Notamment, il est favorable que la couche $C_2$ de type p soit rectangulaire, comme il est montré vu du dessus sur la figure 1a et présente une dimension transversale $d_2$ et une dimension longitudinale, c'est-à-dire parallèle au plan bissecteur YY', notée $\Delta'$.

La couche $C_1$ de type n, présentera une dimension longitudinale sensiblement égale à $\Delta'$, et une dimension transversale $d_1 > d_2$.

Les couches $C_1$ et $C_2$ seront disposées de part et d'autre de la couche guidante $C_G$, en vis-à-vis, de manière à présenter chacune un bord longitudinal BB' en coïncidence entre elles et en coïncidence avec le plan bissecteur YY' de l'angle $2\theta$.

Ainsi, lors de l'application dans le sens direct d'une densité de courant sur cette jonction p-n, on obtiendra par injection de porteurs de charges, une lame de faible indice entre les couches $C_1$ et $C_2$, dans la couche guidante $C_G$, et cette lame offrira un plan réflecteur disposé en coïncidence avec ledit plan bissecteur. Donc selon l'invention, on obtient la réflexion totale interne sur un plan bien localisé. De plus la position du plan réflecteur en coïncidence avec le plan bissecteur est optiquement la plus favorable.

Pour éviter la fuite de l'onde évanescente à travers la lame, lors de la réflexion, il faut prévoir pour la dimension $d_2$ de la couche $C_2$ de type p, qui limite la dimension transversale de la jonction p-n, une valeur au moins telle que :

$d_2 > 3 \mu$m

On choisira de préférence

$d_2$ de l'ordre de 6 $\mu$m à 8 $\mu$m.

Dans un procédé de réalisation décrit plus loin, on verra qu'il est avantageux de réaliser les couches $C_1$ et $C_2$ par simple implantation ou diffusion localisée d'ions appropriés, d'une part en surface du substrat d'InP pour la couche $C_1$ et d'autre part en surface de la région de croisement pour la couche $C_2$.

Il est évident que le dispositif selon l'invention peut être obtenu de la même façon, si les guides sont formés au moyen d'une simple hétérostructure comme représenté figure 2a.

Tel que représenté sur la figure 2c, en coupe selon l'axe II-II de la figure 1b, la structure de guide est une double hétérostructure, avantageusement des mêmes matériaux que celle de la figure 2b, mais le ruban RB est réalisé au moyen d'un sillon formé dans le substrat S et empli du matériau 2 de la couche guidante. La surface du dispositif est alors planaire, comme montré en coupe sur la figure 3c, selon l'axe I-I de la figure 1a. La couche $C_1$ de type n est formée comme il a été dit précédemment dans la partie supérieure du substrat directement sous le matériau guidant ; et la couche $C_2$ de type p est formée dans la couche 3 de confinement supérieure en veillant bien à ce qu'elle atteigne la surface supérieure de la couche 2 de guidage. Les dimensions des différents éléments peuvent être les mêmes que celles qui seront données ultérieurement pour la double hétérostructure de la figure 2b, mais la couche 3 de confinement supérieure aura favorablement dans ce cas une épaisseur $\simeq 2,5\ \mu$m. On notera cependant que ce type de réalisation offre l'avantage de la planarité mais donne des résultats légèrement inférieurs au type dit à ruban externe, et notamment au type dit à ruban externe à couche de confinement supérieure.

Selon l'invention, pour éviter lors du fonctionnement actif de la jonction p-n, c'est-à-dire en commutation, la fuite de l'onde évanescente qui se produisait dans l'art antérieur à chaque extrémité AA' de la région de croisement (voir figure 1b), on choisira la dimension longitudinale $\Delta'$ de la jonction p-n grande devant la dimension $\Delta$ de cette diagonale AA'. De plus, on disposera les extrémités B et B' de la jonction p-n d'une façon sensiblement symétrique par rapport au centre 0 de la région de croisement le long du plan bissecteur longitudinal YY'.

La dimension longitudinale $\Delta$ de la jonction p-n sera choisie d'autant plus grande que l'angle de croisement $2\theta$ sera choisi petit.

D'une façon générale, on choisira l'angle de croisement :

$$2° < 2\theta < 6°$$

et dans ces conditions on choisira

$\Delta' \simeq 600\ \mu$m pour $2\theta \simeq 2°$

$\Delta' \simeq 400\ \mu$m pour $2\theta \simeq 4°$

$\Delta' \simeq 300\ \mu$m pour $2\theta \simeq 6°$

La différence d'indice maximale que l'on peut obtenir par injection de porteurs de charges dans la jonction étant de l'ordre de $\Delta n \simeq 8.10^{-2}$, cette différence d'indice impose un minimum pour l'angle d'incidence $\pi/2 - \theta$ et donc un maximum pour l'angle $\theta$ qui de préférence ne doit pas excéder 2°. Ainsi, plus l'angle $\theta$ sera petit, meilleur sera le taux de réflexion sur la lame formée par la jonction p-n.

Mais si l'on voit d'emblée l'intérêt qu'il y a à réaliser des éléments de commutation dont les guides de sortie font entre eux un petit angle

$$2\theta \leq 4° \text{ (correspondant à } \theta \leq 2°)$$

pour améliorer le taux de réflexion en actif, on se heurte alors à une difficulté. En effet, lorsque l'angle $2\theta$ est inférieur à 4°, alors en passif, le faisceau incident au lieu de se propager uniquement dans le prolongement du guide d'entrée se partage entre les deux guides de sortie et la puissance qui se propage dans le second guide de sortie peut atteindre des proportions importantes de l'ordre de 40 %. Les pertes par diaphonie induites par conversion de mode sont donc très importantes.

Il est évident d'autre part qu'un angle $2\theta$ très petit offre le désavantage d'être difficile à réaliser et de nécessiter une jonction p-n de grande dimension $\Delta'$.

Avec un angle $2\theta \simeq 4°$ et une jonction p-n de dimension $\Delta' \simeq 400\ \mu$m, on obtient déjà, dans la situation de commutation, une extinction supérieure à 30 dB dans le prolongement du guide d'entrée ;

ceci signifie qu'il ne passe plus que 1/1000 de la lumière dans cette voie.

De plus, les observations pratiquées sur le dispositif en fonctionnement montrent que les pertes dues à l'onde évanescente aux points A et A' sont totalement évitées.

Or, il est très important, pour la réalisation d'une matrice au moyen de plusieurs éléments de commutation, que les sorties de l'élément de commutation soient équilibrées, c'est-à-dire que les puissances sur les voies de sortie empruntées par le faisceau en actif et en passif soient égales entre elles. Ceci est atteint lorsque d'une part les pertes sont minimisées à la fois en actif et en passif et d'autre part lorsque l'extinction sur la voie non empruntée atteint au moins 30 dB.

L'effet désavantageux de partage du faisceau en passif peut être minimisé en agissant sur plusieurs paramètres dont en particulier l'angle $2\theta$ de croisement des guides. Un des buts de l'invention est donc de fournir un élément de commutation, qui en transmission permette d'obtenir un coefficient de transmission T aussi voisin de 1 que possible sur le prolongement du guide d'entrée, et un tel coefficient aussi voisin de 0 que possible sur le guide adjacent.

Les conditions de fonctionnement en transmission sont considérées comme idéales lorsque :

$$P_T/ P_{IN} \simeq 1$$
$$P_R/ P_{IN} \simeq 0$$

$P_{IN}$ étant la puissance injectée dans le guide d'entrée $G_1$, $P_T$ la puissance transmise dans le prolongement $G'1$ du même guide au-delà de la région de croisement et $P_R$ la puissance réfléchie, en passif, dans le guide $G'_2$ adjacent.

Les observations qui ont conduit au dispositif selon l'invention montrent que les résultats sont toujours légèrement meilleurs lorsque l'on met en oeuvre des guides à double hétérostructure. On choisira donc dans l'exemple de réalisation décrit ci-après, de montrer l'influence des différents paramètres d'une telle double hétérostructure sur le comportement d'un élément selon l'invention. Ces différents paramètres sont donc :

- la structure de guide à double hétérostructure conforme à la figure 2b et à sa description ;
    - l'angle de croisement $2\theta$ ;
    - l'épaisseur $e_3$ de la couche 3 de confinement supérieure,
    - la dimension transversale $\underline{a}$ du ruban RB ;
    - la hauteur h dont le ruban RB est érigé au-dessus de la couche 3 ;
    - la composition de la couche quaternaire, c'est-à-dire la concentration y en As.

Les quatre derniers paramètres, à savoir $e_3$, $e_G$, h et y permettent de calculer la variation d'indi-

ce $\Delta n$ qui apparaît du fait de la différence d'épaisseur entre les régions 101, 102 et la région 100 (voir la figure 2b).

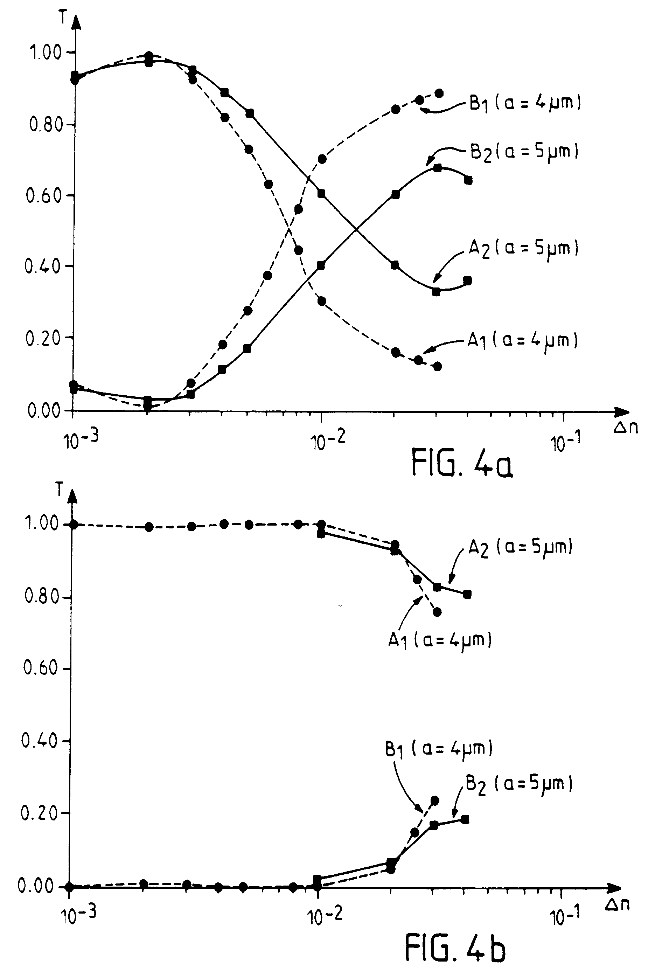

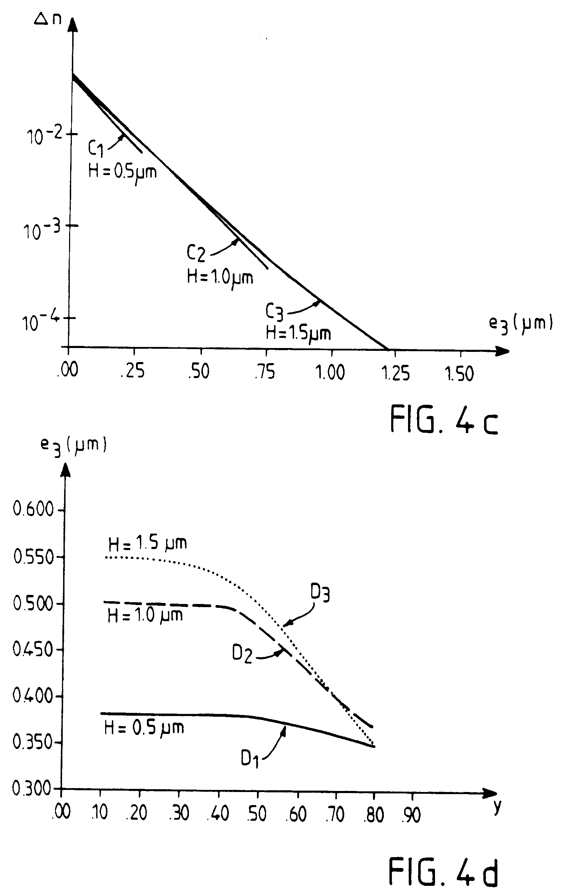

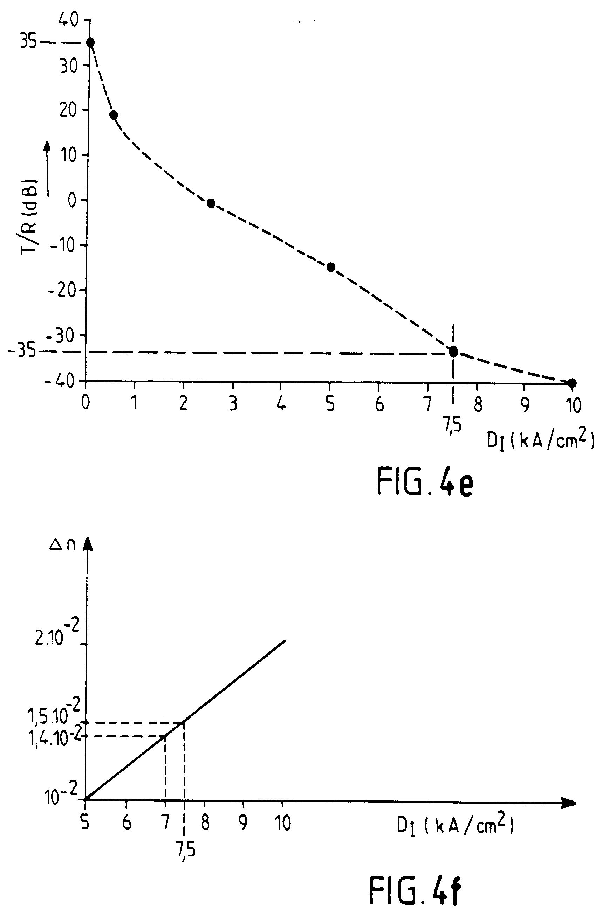

Les courbes de la figure 4 ont été établies dans le cas d'une double hétérostructure conforme à celle de cette figure 2b, pour mettre en évidence les conditions dans lesquelles le fonctionnement en passif est optimal.

Les courbes de la figure 4a représentent les variations de la puissance de sortie sur la puissance d'entrée sur les deux voies de sortie, en passif, lorsque l'angle de croisement $2\theta \simeq 2°$, en fonction de $\Delta n$.

- la courbe $A_1$ représente $P_T/P_{IN}$ dans $G'_1$ pour $a = 4\mu m$
- la courbe $A_2$ représente $P_T/P_{IN}$ dans $G'_1$ pour $a = 5\mu m$
- la courbe $B_1$ représente $P_R/P_{IN}$ dans $G'_2$ pour $a = 4\mu m$
- la courbe $G_2$ représente $P_R/P_{IN}$ dans $G'_2$ pour $a = 5\mu m$

Les courbes de la figure 4b représentent les mêmes variables, lorsque l'angle de croisement $2\theta = 4°$.

A partir de la figure 4a, on constate que pour un angle $2\theta \simeq 2°$, les conditions optimales de fonctionnement en passif ne sont obtenues que dans un domaine très étroit, où $\Delta n \simeq 2.10^{-3}$, et que les résultats sont un peu meilleurs, c'est-à-dire les pertes moins élevées ($P_T/P_{IN}$ plus proche de 1 et $P_R/P_{IN}$ plus proche de zéro) pour des guides de dimension $\underline{a} \simeq 4 \mu m$ (courbes $A_1$ et $B_1$).

Par contre, lorsque $\underline{a} \simeq 5 \mu m$ (courbes $A_2$ et $B_2$ de la figure 4a) on n'obtient jamais $P_T/P_{IN} = 1$ ou $P_R/P_{IN} = 0$, mais le confinement latéral est un peu moins critique.

A partir de la figure 4b, on constate que dès que l'angle $2\theta \simeq 4°$, les conditions optimales de fonctionnement en passif ($P_T/P_{IN} \simeq 1$ et $P_R/P_{IN} \simeq 0$) peuvent être obtenues dans un plus large domaine correspondant à :

$$10^{-3} \leq \Delta n \leq 10^{-2}$$

et que les conditions sur la dimension $\underline{a}$ sont moins draconiennes. En fait le fonctionnement optimal en passif est obtenu, avec $2\theta \simeq 4°$ pour

$$3 \, \mu m \leq \underline{a} \leq 6 \, \mu m$$

Les courbes de la figure 4c montrent l'influence de l'épaisseur $e_3$ de la couche de confinement 3 sur la valeur de la différence d'indice $\Delta n$ entre les régions 101, 102 et 100, pour différentes valeurs de la hauteur

$$H = h + e_3$$

de matériau de confinement 3 disposé au-dessus de la région guidée 100.

On constate d'après les courbes de la figure 4c où

$C_1$ correspond à $H = 0,5 \, \mu m$
$C_2$ correspond à $H = 1,0 \, \mu m$
$C_3$ correspond a $H = 1,5 \, \mu m$
que la valeur optimale

$$10^{-3} \leq \Delta n \leq 10^{-2}$$

est obtenue plus favorablement avec

$H \simeq 1,0 \, \mu m$

et $0,25 \, \mu m \leq e_3 \leq 0,65 \, \mu m$
résultant en une hauteur du ruban RB

$0,35 \, \mu m \leq h \leq 0,75 \, \mu m$

ces résultats étant obtenus en fixant les autres paramètres du dispositif tels que la concentration y en arsenic de la couche quaternaire et la longueur d'onde de fonctionnement $\lambda$ aux valeurs :

$y \simeq 0,5$
$\lambda \simeq 1,55 \, \mu m$

Cette concentration de la composition de la couche quaternaire joue aussi un rôle dans l'optimisation du dispositif en passif. La figure 4d montre l'influence de la concentration y (x étant choisi tel que x = 0,435 y pour la stoechiométrie) sur la dimension $e_3$ qui doit être choisie pour obtenir :

$\Delta n \simeq 2.10^{-3}$ à la longueur d'onde de fonctionnement $\lambda \simeq 1,55 \, \mu m$.

La courbe $D_3$ a été tracée pour $H = 1,5 \, \mu m$,
La courbe $D_2$ a été tracée pour $H = 1,0 \, \mu m$
La courbe $D_1$ a été tracée pour $H = 0,5 \, \mu m$

Ces couches sont données pour montrer à l'homme du métier comment agir sur les différents paramètres y, $e_3$, H, h pour obtenir les meilleurs résultats possibles en passif, tout en disposant d'une certaine latitude sur la technologie qui permet d'obtenir $\underline{a}$, H et h, et donc sur la façon de mettre en oeuvre le dispositif selon l'invention.

On constate donc que, d'une façon générale, on a intérêt à choisir un angle $2\theta \simeq 4°$ qui donne les meilleurs résultats aussi bien en actif qu'en passif, et laisse une certaine marge d'erreurs possible sur la dispersion des autres paramètres lors de la mise en oeuvre de ce dispositif.

D'autre part, pour la propagation des signaux lumineux monomodes dans la couche quaternaire, les calculs montrent que l'épaisseur optimale de cette dernière, en tenant compte des valeurs des autres paramètres précédemment choisies, est :

$e_G \simeq 0,4 \, \mu m$

L'expérimentation de dispositifs réalisés conformément aux calculs a montré des résultats parfaitement en conformité avec les résultats prévus en simulation.

Le dispositif selon l'invention offre encore l'avantage d'être réalisé sur un substrat semi-isolant approprié à recevoir aussi des éléments actifs tels que des transistors à effet de champ, des diodes etc... De plus, les contacts électriques peuvent être réalisés sur une seule face du substrat.

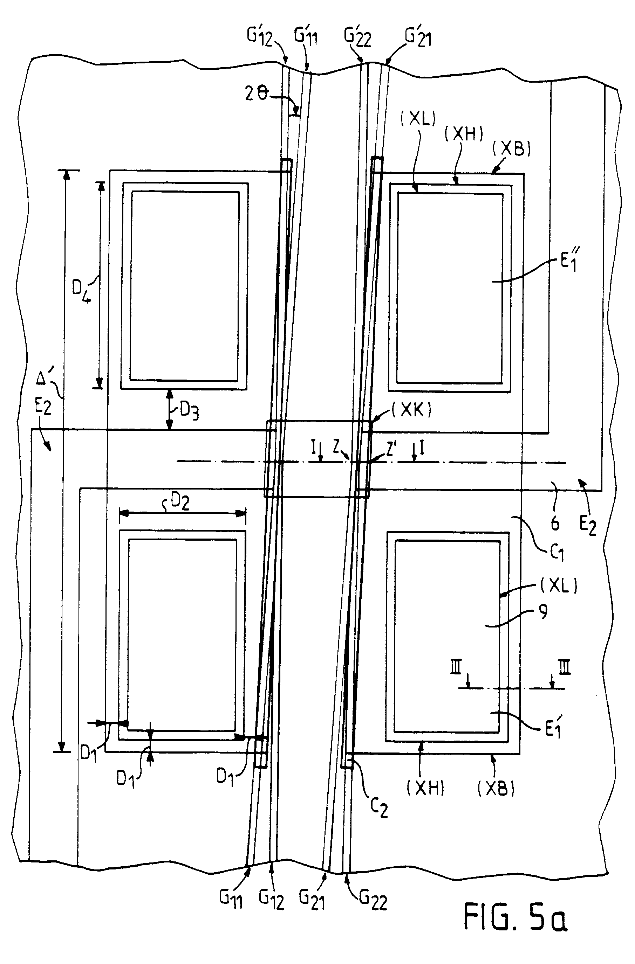

Tel que représenté en coupe, selon l'axe I-I de la figure 1a, sur la figure 3a, l'élément de commutation comprend en outre un contact $E_2$ de type p pour l'injection des porteurs dans la couche $C_2$, et tel que représenté en coupe selon l'axe III-III de la figure 5a, sur la figure 3b, un contact $E_1$ de type n pour l'extraction des porteurs de la couche $C_1$.

Comme il est montré vu du dessus sur la figure 5a, on réalisera le contact $E_2$ de préférence sous la forme d'un plot, ou d'une ligne, disposé selon l'axe de symétrie transversal ZZ' de la région de croisement ; de manière à injecter le maximum de porteurs au centre de la couche $C_2$ dans la région de croisement.

Comme il est montré sur cette même figure 5a, on réalisera le contact $E_1$ de préférence sous la forme de deux plots $E'_1$ et $E''_1$ de grande surface dont l'un des bords se trouve aussi rapproché que possible de la couche $C_2$, par exemple à un distance $D_1 \simeq 10$ $\mu$m. Les plots $E'_1$ et $E''_1$ sont prévus symétriques par rapport à l'axe transversal ZZ' de la région de croisement pour permettre l'extraction des porteurs symétriquement par rapport à leur injection.

La figure 3a montre en coupe que le contact électrique $E_2$ de type p peut être constitué d'une couche 5 en alliage TiPtAu formant avec la couche $C_2$ un contact ohmique, surmontée d'une couche d'épaississement 6 du même alliage, pour réaliser des connexions, cette couche d'épaississement 6 étant alors partiellement réalisée sur une couche isolante 7 pour permettre de former par exemple les lignes d'arrivée du courant.

La figure 3b montre en coupe que les contacts $E'_1$ et $E''_1$ peuvent être constitués d'une couche 8 de l'alliage AuGeNi, formant avec la couche $C_1$ un contact ohmique, surmontée d'une couche 9 d'épaississement de l'alliage TiPtAu pour relier par exemple ces plots à la masse. Les couches 8 et 9 constituant les contacts $E'$ et $E''_1$ peuvent être réalisées dans des ouvertures disposées dans les couches supérieures du dispositif, découvrant la surface supérieure de la couche $E_1$. Une couche isolante 7 est également prévue pour isoler ces contacts des autres parties du dispositif.

La figure 5a montre aussi vu du dessus un exemple de disposition des différents éléments les uns vis-à-vis des autres pour former deux éléments de commutation. On trouve ainsi deux premiers guides, dont les entrées sont $G_{11}$ et $G_{12}$, et dont les sorties sont $G'_{11}$ et $G'_{12}$, qui sont linéaires et se croisent sous un angle $2\theta$. Puis on trouve deux autres guides, dont les entrées sont $G_{21}$, $G_{22}$, dont les sorties sont $G'_{21}$, $G'_{22}$ de même configuration. Deux éléments ainsi groupés, et réalisés dans le cas où l'angle de croisement $2\theta \simeq 4°$, occupent une surface de 400 $\mu$m x 400 $\mu$m en tenant compte de la place prise par les lignes d'alimentations électriques.

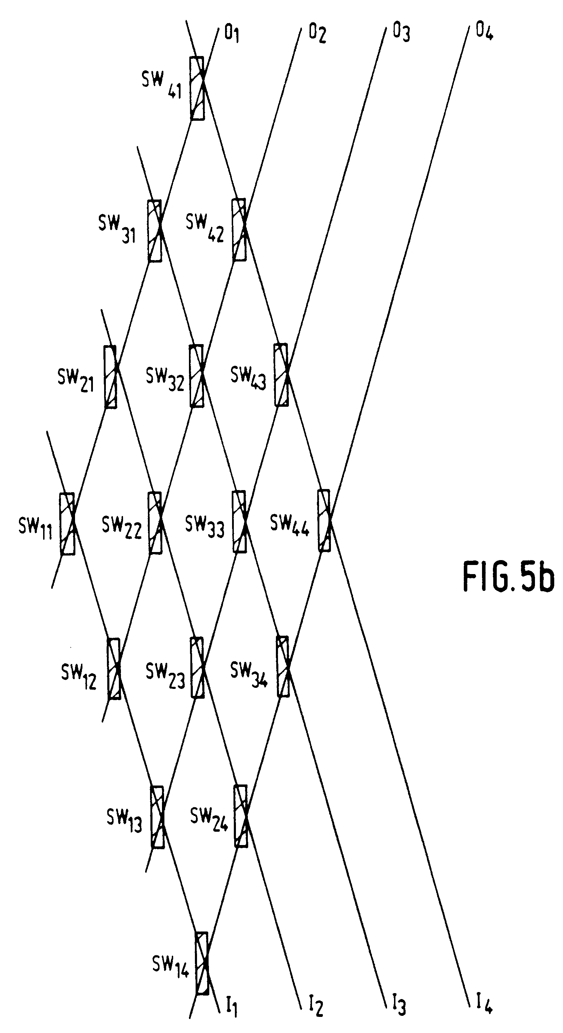

L'élément de commutation selon l'invention est spécialement prévu, comme il a déjà été dit précédemment, pour permettre la réalisation de matrices de commutation de N guides dans N guides et non pas le multiplexage de signaux. Une matrice de commutation de 4 guides $l_1$, $l_2$, $l_3$, $l_4$ dans 4 guides $0_1$, $0_2$, $0_3$, $0_4$ constituée d'éléments de commutation selon l'invention est représentée vue du dessus très schématiquement sur la figure 5b. Elle comprend 16 éléments $Sw_{ij}$. Elle occupe une surface de 2,8 mm sur 0,8 mm sur un substrat d'environ $3 \times 1$ mm$^2$.

## Exemple II

Dans cet exemple de réalisation, on décrit un élément de commutation en forme de Y, illustré par l'ensemble des figures 1c, 1d, 1e ; 2d, 2e ; 3b, 3d ; 4a à 4f ; 5c et éventuellement 5a.

Tel que représenté sur la figure 1c, vu du dessus, et schématiquement, l'élément de commutation en forme de Y comprend d'abord un guide d'entrée rectiligne $G_1$, un premier guide de sortie $G'_1$, disposé dans le prolongement du guide d'entrée, et un second guide de sortie $G'_2$ faisant avec le premier guide $G'_1$ un angle faible $2\theta$.

Pour la nécessité d'un fonctionnement en réflexion totale la valeur de l'angle $2\theta$ doit être inférieure à 6°. Cet angle $2\theta$ de raccordement admet un plan bissecteur dont la trace est représentée par YY' sur les figures 1. La dimension transversale de tous les guides est choisie identique dans la description suivante pour la simplicité du procédé de réalisation.

L'objet de l'élément de commutation en forme de Y est d'accomplir des performances identiques à celles de l'élément en forme de X de l'exemple I, tout en ayant la propriété de permettre la réalisation d'un autre type de matrice, cette fois complètement symétrique, décrite plus loin.

Cet élément de commutation en forme de Y, comprend d'abord des moyens pour effectuer la commutation qui sont totalement similaires aux moyens de l'élément en X de l'exemple I.

Ces moyens consistent en la formation d'un plan réflecteur dont la trace est BB' sur les figures 1c et 1d, et qui est disposé en coïncidence avec le plan bissecteur YY' de l'angle de raccordement $2\theta$. Ce plan réflecteur est obtenu de la même façon que dans l'exemple I.

Lorsque la jonction 10 sera active, un signal entrant dans le guide $G_1$ disposé dans la zone opposée à celle de la jonction sera réfléchi par le plan réflecteur symbolisé par BB' et sortira par le guide $G'_2$ désorienté d'un angle $2\theta$ par rapport à l'axe de $G_1$.

Lorsque la jonction 10 sera passive, le signal entrant par le guide $G_1$ continuera son chemin au-delà de la région de raccordement et sortira par le prolongement $G'_1$ du guide d'entrée $G_1$.

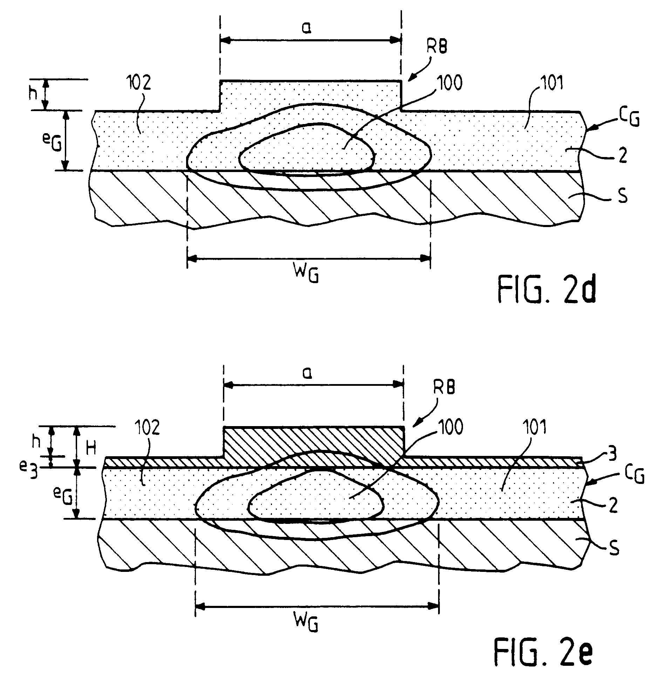

Telle que représentée sur la figure 2d qui est une coupe selon l'axe II-II de la figure 1c, la structure d'un guide de lumière appropriée à atteindre les buts de l'invention est exactement la même que décrite dans l'exemple I correspondant à la figure 2a. Cependant, chaque guide comprend un ruban de guidage RB qui est ici de section rectangulaire et présente une dimension transversale $\underline{a}$. Les flancs du ruban sont donc parallèles entre eux et perpendiculaires au substrat. On verra plus loin que, dans un mode de réalisation préférentiel de cet exemple II, la section du ruban de guidage devra être obligatoirement et nécessairement rectangulaire.

Dans une réalisation préférentielle de l'invention, telle que représentée en coupe selon l'axe II-II de la figure 1c, sur la figure 2e, la structure d'un guide de lumière appropriée à atteindre les buts de l'invention est exactement la même que décrite dans l'exemple I correspondant à la figure 2b, qui est le cas de la double hétérostructure.

Pour l'application envisagée, il sera favorable de choisir les mêmes matériaux que décrits dans l'exemple I.

Comme on l'a vu précédemment, une jonction p-n n'est pas suffisante pour obtenir un plan réflecteur parfait lors du fonctionnement actif, il faut adjoindre à cette jonction une structure de restriction de courant. Dans cet exemple de réalisation, cette structure est réalisée de façon simple et performante comme il est montré sur la figure 3d, en coupe selon l'axe I-I de la figure 1c, et correspondant à une structure de guide à double hétérostructure conforme à la figure 2e. Cette jonction p-n comprend d'une part une couche $C_1$ en un matériau 1 de type de conductivité n disposée dans la partie supérieure du substrat S qui est alors choisi semi-isolant, et d'autre part une couche $C_2$ en un matériau 4 de type de conductivité p disposée dans la partie supérieure de la couche guidante $C_G$ ou de manière adjacente à cette couche.

La forme et la disposition générale des couches les unes vis-à-vis des autres, le fonctionnement de principe de la jonction p-n, et le procédé de réalisation sont les mêmes que dans l'exemple I. Il est de même possible de réaliser l'élément en Y au moyen de la simple hétérostructure de la figure 2d.

Les courbes isoénergies représentées sur les coupes, figure 2d et figure 2e, montrent que l'onde transportée sous les rubans RB de dimension transversale déborde latéralement de part et d'autre du ruban RB d'environ 1 à 2 $\mu$m, et que l'onde occupe un espace de dimension latérale $w_G > \underline{a}$ avec $W_G - a \simeq 2$ à 4 $\mu$m. En se reportant à la figure 1d, on constate que, selon l'invention, on a prévu de réaliser un plan réflecteur dont la trace est BB', qui déborde suffisamment de part et d'autre de AA' ; AA' étant la trace du plan réflecteur strictement indispensable à réfléchir l'onde de dimension transversale $W_G$. La figure 1d montre notamment la trace des rayons lumineux extrêmes séparés par la distance $w_G$.

Avec un angle de raccordement $2\theta \simeq 4°$, il faudra prévoir de réaliser un plan réflecteur, de trace BB' sur la figure 1b, tel que les dépassements C'B' et CB de part et d'autre du guide d'entrée $G_1$ soient de dimension $d'_0 \simeq 40$ à 60 $\mu$m pour assurer en actif la réflexion de l'ensemble du mode guidé dans l'espace de dimension transversale $W_G$, dans le guide $G'_2$ ($d'_0$ étant la projection des dépassements C'B' et CB sur la direction de propagation $G_1$-$G'_1$).

Dans le but d'obtenir la réflexion totale interne dans de bonnes conditions, le choix des angles de raccordements est fondé sur les mêmes critères que dans l'exemple I, le raisonnement étant illustré par les figures 4a, 4b, 4c et 4d. On a vu que la valeur de 4° est une valeur "charnière" pour le comportement de faisceaux qui rencontrent une branche de raccordement en forme de Y à l'état passif. Pour des angles de l'ordre de 2°, le faisceau incident se partage entre les deux branches du Y, alors que pour des angles de l'ordre de 8° le faisceau incident continue son parcours dans le prolongement du guide d'entrée pratiquement sans voir le guide adjacent. Les pertes dans le guide adjacent sont d'autant plus faibles que l'angle est grand. Par exemple, en utilisant un angle de 8° entre deux guides qui se croisent, le guide adjacent montrera une extinction de 40 dB par rapport au guide droit, c'est-à-dire que seulement 1/10000 de la lumière est perdue lors du croisement.

Le choix d'un angle de raccordement aussi petit que 4° impose alors une condition sur la dimension transversale de la jonction. Pour que l'extinction soit aussi poussée que possible dans le prolongement du guide d'entrée lorsque la jonction est active, des calculs montrent (voir la figure 1c) que l'épaisseur $d_0$ de la jonction p-n le long de l'axe optique du guide d'entrée doit être d'au moins 40 $\mu$m, sinon l'onde évanescente traversera la lame de faible indice formée en actif.

En tenant compte d'un angle de croisement $2\theta$ de 4°, donc d'un angle $\theta \simeq 2°$, et d'une dimension $d_0$ de 60 $\mu$m de la jonction le long de l'axe, la dimension $d_2$ de la jonction doit être de l'ordre de 3 $\mu$m à 8 Mm, comme dans l'exemple I.

L'élément de commutation en forme de Y comprend aussi des moyens pour que les conditions de fonctionnement en transmission, c'est-à-dire lorsque la jonction est passive, soient idéales.

On a vu dans l'exemple I que ces conditions idéales lorsque :

T ≃ 1 (Atténuation 0 dB)

R ≃ 0 (Atténuation au moins 30 dB).

Pour réaliser ces conditions, on choisira les paramètres suivants identiques à ceux de l'exemple I :

- la structure de guide à double hétérostructure conforme à la figure 2e et à sa description ;
- l'angle de croisement $2\theta$ ;
- l'épaisseur $e_3$ de la couche 3 de confinement supérieure ;
- la dimension transversale $\underline{a}$ du ruban RB ;
- la hauteur h dont le ruban RB est érigé au-dessus de la couche 3 ;
- la composition de la couche quaternaire, c'est-à-dire la concentration y en As.
- et la variation d'indice $\Delta n$ qui apparaît du fait de la différence d'épaisseur $H-e_3$ entre les régions 101, 102 et la région 100.

Cependant, si l'on veut, dans le présent exemple de réalisation, réaliser des éléments de commutation où

$2\theta \simeq 4°$ en poussant encore plus loin l'optimisation, pour obtenir la performance $P_T/P_{IN} \simeq 1$ $P_R/P_{IN} \simeq 0$ (avec atténuation la plus poussée possible), alors se pose le problème du confinement dans la région de raccordement en passif.

Dans cet exemple de réalisation, on résout de préférence ce problème au moyen d'un sillon 12 à flancs parallèles, disposé en travers du second guide de sortie $G'_2$, présentant un flanc en coïncidence avec le flanc du ruban RB du guide d'entrée $G_1$, présentant une profondeur h égale à la hauteur dont est érigé ce ruban RB au-dessus du dispositif, et présentant une dimension transversale $d_3$ suffisante pour le confinement en passif et cependant pas trop grande pour gêner la propagation du faisceau réfléchi en actif. Cette dimension $d_3$ transversale sera de l'ordre de 2 $\mu$m à 5 um et de préférence 4 $\mu$m. Le sillon 12 est donc de section rectangulaire et la section du ruban de guidage associé est obligatoirement rectangulaire dans ce cas. Une telle réalisation de sillons avec une extrêmement haute précision dans le positionnement, la dimension transversale, et avec des flancs absolument verticaux est maintenant à la portée de l'homme du métier comme il est montré notamment dans la demande de brevet français enregistrée sous le N° 88 08 504, déposée le 24 juin 1988.

La faible dimension transversale qui peut être obtenue par le procédé de réalisation connu de la même demande de brevet est également justement appropriée à atteindre le but de l'invention qui consiste à ne pas perturber le faisceau transmis en passif.

Ainsi muni du sillon 12, l'élément de commutation de cet exemple II est particulièrement optimisé pour permettre l'utilisation de petits angles de raccordement permettant d'obtenir un petit angle $\theta$ favorable à l'obtention de la réflexion totale interne.

La figure 4e montre le coefficient de transmission T dans la première voie de sortie sur le coefficient de réflexion R dans la seconde voie de sortie en fonction de la densité de courant $D_i$ injectée dans la jonction. On constate qu'avec un élément de commutation réalisé dans le présent exemple dans les conditions où

$a \simeq 5 \mu$m

$d_3 \simeq 4 \mu$m

$2\theta \simeq 4°$

On obtient le rapport T/R = + 35dB en passif quand $D_i = 0$ et le rapportT/R = -35dB en actif quand $D_i = 7,5KA/cm^2$. En fait le dispositif de cet exemple est très satisfaisant en passif, et très satisfaisant en actif dès que $D_i$ atteint 7 kA/cm².

La courbe de la figure 4f donne la différence d'indice $\Delta n$, qui est obtenue au passage du plan réflecteur crée par la jonction en actif en fonction de la densité de courant appliquée sur la jonction. Pour $D_i \simeq 7$ kA/cm², la différence d'indice engendrée est $\Delta n \simeq 1,4.10^{-2}$.

Cependant le confinement de la lumière dans les guides, même en dehors de la région de commutation n'est pas laissée au hasard, car une matrice entière ne peut être réalisée, si des pertes apparaissent dans les tronçons de guide de raccordement d'un élément à un autre élément, ces pertes s'ajoutant et augmentant d'autant plus que la matrice contient davantage d'éléments.

C'est pourquoi la structure de guides est choisie comme dans l'exemple I pour minimiser les pertes dans ces tronçons de guides, d'après l'étude des courbes représentées sur les figures 4a, 4b, 4c et 4d.

Donc selon l'invention le problème posé par l'adoption d'un angle de raccordement de l'ordre de 4° est résolu aussi bien en actif qu'en passif, par l'adoption d'un sillon 12 réalisée comme il est préconisé, coopérant avec le choix d'une valeur optimale de la densité de courant appliquée sur la jonction, en tenant compte de la courbe des figures 4e et 4b, les autres paramètres étant ceux de l'exemple I.

Dans cet exemple, comme dans l'exemple I, l'élément peut être réalisé sur un substrat semi-isolant. De plus les contacts électriques peuvent être réalisés sur une seule face du substrat, exactement comme montré vu du dessus sur la figure 5a, à ceci près que les branches $G_{12}$ et $G_{22}$ sont omises, et en coupe selon l'axe III-III de cette figure 5a, sur la figure 3b, dont la description est donnée dans l'exemple I.

Les composés et matériaux pour former les différentes régions de l'élément en Y sont aussi les mêmes que décrits pour l'élément X de l'exemple I.

L'élément de commutation en forme de Y de cet exemple est essentiellement destiné à être groupé à 3 autres éléments de même nature et structure pour constituer une cellule unitaire de commutation, notée CL.

Une telle cellule unitaire CL est représentée vue du dessus, schématiquement, sur la figure 1e.

Cette cellule CL comprend deux guides rectilignes parallèles formés pour le premier, des tronçons $G_{11}$, $G'_{11}$, $G''_{11}$ disposés dans le prolongement les uns des autres, et pour le second des tronçons $G_{21}$, $G'_{21}$, $G''_{21}$ disposés dans le prolongementles uns des autres. Cette cellule comprend également deux tronçons de guide $G'_{12}$ et $G'_{22}$ qui se croisent sous un angle $4\theta$ et qui se raccordent avec les deux guides parallèles sous un angle $2\theta$. Enfin, la cellule comprend 4 jonctions p-n respectivement 10a, 10b, 10c, 10d chacune disposée dans une des 4 régions de raccordement faisant avec les guides rectilignes un angle $\theta$. Des sillons respectivement 12a, 12b, 12c, 12d correspondant aux sillons 12 déjà décrits, sont disposés dans les régions de raccordement pour atteindre les buts de l'invention dans chacun des quatre éléments de commutation formant la cellule unitaire.

Lorsqu'un signal $P_{IN1}$ est injecté dans le guide $G_{11}$, selon que l'on active ou non la jonction p-n 10a, le faisceau est réfléchi dans le guide $G'_{12}$ ou bien continue son chemin dans les guides $G'_{11}$ et $G''_{11}$, respectivement. Si la jonction 10a est activée, alors on active simultanément la jonction 10c pour obtenir que le faisceau qui se propage dans le guide $G'_{12}$ soit réfléchi par le plan réflecteur formé par cette jonction 10c et se propage alors dans le guide $G''_{21}$. On a donc eu dans ce cas commutation du premier guide rectiligne formé de $G_{11}$, $G'_{11}$, $G''_{11}$ dans le second guide rectiligne formé de $G_{21}$, $G'_{21}$; $G''_{21}$.

D'autre part, un signal $P_{IN2}$ injecté dans le guide $G_1$, peut, selon que l'on active ou non les jonctions 10d et 10b,soit sortir dans $G''_0$, soit sortir dans le prolongement $G''_{21}$ de $G_{21}$ respectivement.

Ce type de cellule unitaire de commutation CL, d'une part permet le multiplexage de signaux, et d'autre part est parfaitement symétrique, ce qui est important pour certaines applications en télécommunication.

Des cellules unitaires CL telles que représentées sur la figure 1e peuvent ensuite être groupées pour former une matrice de commutation de N guides dans N guides.

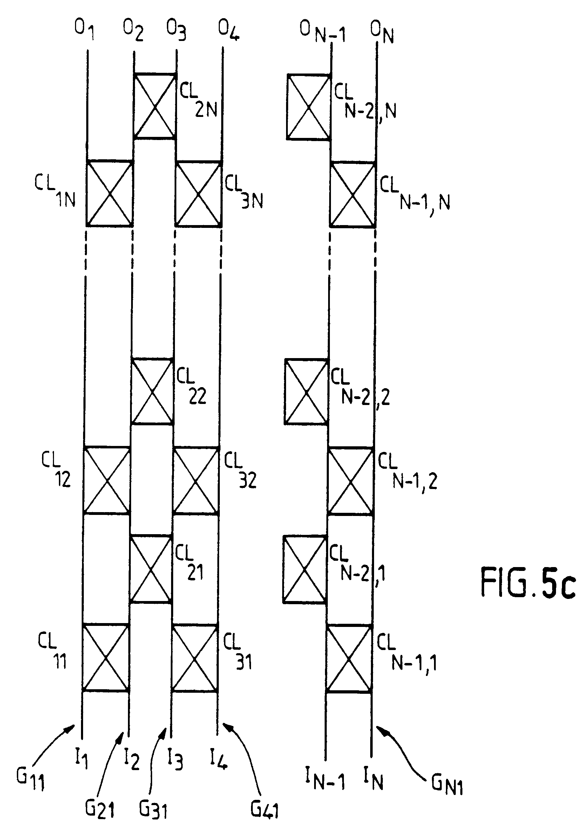

Pour obtenir la commutation de N guides dans N guides, il faudra disposer N(N-1)/2 cellules unitaires CL en quinconce entre des guides de lumière rectilignes parallèles comme il est montré sur la figure 5c.

## Procédé de réalisation I

Ce procédé est illustré par les figures 3a, 3b, 3d et 5a. Le procédé suivant est donné à titre d'exemple dans le cas où l'on désire réaliser des éléments de commutation selon l'invention dans une technologie mettant en oeuvre la double hétérostructure montrée sur l'une des figures 2b ou 2e. Ce procédé comprend les étapes successives suivantes :

a) formation d'un substrat S en phosphure d'indium InP, semi-isolant, par exemple sous la forme d'une plaquette obtenue par tronçonnage d'un lingot massif d'InP, lui-même obtenu par tirage par la méthode Czochralski par encapsulation liquide (fig.3a, ou 3d) ;

b) réalisation d'un masque, noté XB dur les figures 3 et 5a, délimitant la surface de la future couche $C_1$ et notamment présentant un bord BB' en coïncidence exacte avec le futur plan de symétrie YY' de la région de croisement, puis implantation, dans l'ouverture de ce masque, d'ions tels que Si appropriés à former une couche $C_1$ de type n dans la partie supérieure du substrat. Pour obtenir une couche implantée uniformément sur une épaisseur de 1 $\mu$m environ, on peut pratiquer deux implantations successives avec des énergies différentes, puis effectuer un recuit. On obtient alors une couche uniforme dopée à environ $10^{18}$ ions/cm$^3$ et présentant des flancs verticaux, donc au moins un bord BB' bien en coïncidence avec YY'. La dimension de la couche $C_2$ parallèlement à l'axe YY' sera de préférence $\Delta'$ = 400 $\mu$m et dans le sens perpendiculaire $d_1 \approx 100$ $\mu$m (fig. 3a, 3d) ;

c) formation par épitaxie en phase liquide de préférence d'une couche 2 en $Ga_xIN_{1-x}AS_yP_{1-y}$ dans laquelle $y \approx 0,5$

$x \approx 0,435$ y

Si l'épitaxie est réalisée par VPE alors dans cette étape on peut réserver les ouvertures pour former ultérieurement les plots de contacts $E'_1$ et $E''_1$. A cet effet, on dépose, dans l'ouverture d'un masque XH, une couche protectrice en diélectrique, par exemple en silice. Par la méthode VPE, le matériau quaternaire ne croît pas sur le matériau diélectrique et la surface de l'ouverture future reste libre. La couche 2 présentera de préférence une épaisseur $e_G \approx 0,4$ $\mu$m. (fig.3a, 3d) ;

d) formation en surface de la couche 2, d'une couche 3 d'InP, réalisée de préférence par épitaxie en phase vapeur (VPE). Cette couche présentera de préférence une épaisseur $H \approx 1,0$ $\mu$m ;

e) gravure de la couche 3, dans l'ouverture d'un masque, des rubans RB des guides, sur une profondeur

$$0,35 \ \mu m \leq h \leq 0,75 \ \mu m$$

pour laisser une largeur de guide $a \simeq 4 \ \mu m$ ;

f) diffusion localisée dans l'ouverture d'un masque XF, d'espèces telles que Zn, destinées à réaliser la couche $C_2$ de type de conductivité p. Ce masque XF présente un de ses bords décalé d'une distance $d$ vers le bord des guides situé vers la jonction. Cette distance $d$ est choisie ici de 1 $\mu m$ pour que, après la diffusion localisée, le bord de la couche $C_2$ obtenue soit en coïncidence parfaite avec l'axe YY' et le bord BB' de la couche $C_1$. L'homme du métier sait en effet que la diffusion s'étend toujours légèrement sous le masque qui la délimite mais que cette extension est contrôlable et reproductible avec l'expérimentation. On cherche ici a obtenir une épaisseur de diffusion égale à l'épaisseur :

$$H = e_3 + h.$$

Cette couche $C_2$ diffusée présentera de préférence une dimension $\Delta'$ parallèlement à l'axe YY' telle que

$$\Delta' = 400 \ \mu m$$

et une dimension $d_2$ perpendiculaire à cet axe telle que :

$$d_2 = 8 \ \mu m \ \text{à} \ 10 \ \mu m \ (\text{fig.3a, 3d}) ;$$

g) réalisation en surface des plots $E'_1$, $E''_1$, après élimination de la couche diélectrique qui protège leur emplacement, et dans l'ouverture d'un masque XI (voir figure 3b), d'une couche 8 d'alliage AuGeNi pour former les contacts ohmique de type n.

h) protection de la surface du dispositif par une couche 7 diélectrique par exemple de $SiO_2$, laissant des ouvertures XK (voir fig.3b) ;

i) dépôt dans l'ouverture d'un masque XG (voir figures 3a et 3d) d'une première couche 5 d'alliage TiPtAu pour former les contacts ohmiques $E_2$ de type p, puis dépôt dans l'ouverture d'un masque XL d'une seconde couche de cet alliage pour former, en surface de la couche 7 diélectrique, les lignes d'interconnexions électriques.

Tout au long de ce procédé de réalisation, au moins un bord de chaque masque peut être prévu parallèle à un axe d'un des guides, sauf les masques XB et XF qui doivent obligatoirement présenter un bord parallèle à l'axe de symétrie YY' de l'angle de croisement (voir figures 3a et 5a).

D'autre part, si la croissance VPE est utilisée pour réaliser les couches épitaxiales, des motifs de test et des motifs d'alignement peuvent être prévus sur le substrat, simplement protégés par une couche diélectrique transparente par exemple $SiO_2$.

Comme la croissance VPE n'a pas lieu sur le diélectrique, ces motifs sont alors préservés et apparents pendant toute la réalisation. Ce procédé d'alignement est particulièrement important du fait que l'on cherche particulièrement à aligner le bord BB' de la fonction avec l'axe YY'.

**Procédé de réalisation II**

Le procédé suivant est donné à titre d'exemple dans le cas où l'on désire réaliser des éléments de commutation présentant une structure planaire conforme à la figure 3c. Ce procédé ne peut être utilisé que pour mettre en oeuvre un élément en X selon l'exemple I ou un élément en Y si ce dernier est dépourvu des sillons 12 décrit dans l'exemple II.

On notera que les étapes a et b sont d'abord identiques à celles du procédé I.

Entre l'étape b) et l'étape c), on inclut une étape b') durant laquelle on forme des sillons de profondeur h et largeur $a$, sur l'emplacement voulu pour les guides de lumière. L'épaisseur de la couche 1 pour former $C_1$ doit être prévue supérieure à h.

On reprend ensuite identiquement les étapes c) et d) du procédé I, mais on exclut l'étape e) de formation de rubans érigés, puisque dans ce procédé II, la structure des guides est inversée, les guides étant alors entièrement enterrés.

On reprend ensuite les étapes normales f), g), h), i) du procédé I.

**Revendications**

1. Dispositif semiconducteur intégré incluant au moins un élément opto-électronique de commutation, cet élément comprenant au moins une hétérostructure de couches de matériaux III-V incluant un substrat (S) et une couche guidante (CG) pour former des guides de lumière avec un ruban de guidage (RB), dont :
   - au moins un guide d'entrée (G1) rectiligne, pour l'introduction d'un signal lumineux,
   - un premier guide de sortie (G'1), rectiligne, dans le prolongement du guide d'entrée (G1),
   - un second guide de sortie (G'2) rectiligne, couplé avec le premier guide de sortie (G'1) en faisant avec ce dernier un angle donné ($2\theta$) dans une région dite de commutation, cet élément comprenant en outre, dans cette région de commutation pour former un élément de réflexion du signal vers le second guide (G'2) d'entrée :

- une jonction p-n formée d'une première couche (C1), dite inférieure, d'un premier type de conductivité, et d'une seconde couche (C2), dite supérieure, du type de conductivité opposé, disposée de part et d'autre de la couche guidante et de manière adjacente à celle-ci, la seconde couche (C2) supérieure s'étendant de manière dissymétrique par rapport au plan bissecteur (YY') longitudinal de l'angle ($2\theta$) des guides de sortie (G'1, G'2), sur la demi région délimitée par ce plan qui comprend le premier guide de sortie (G'1), cette couche supérieure (C2) ayant un bord (BB') en coïncidence avec ce plan bissecteur, et ayant une dimension, dans cette direction longitudinale, égale ou supérieure à deux fois celle de la région de commutation et débordant sensiblement symétriquement de part et d'autre de cette région de commutation, caractérisé en ce que, pour réaliser une structure de restriction de courant faisant coïncider exactement l'élément de réflexion avec ledit plan bissecteur et pour la réflexion totale du signal d'entrée vers le second guide de sortie (G'2) en actif, la première couche inférieure (C1) de la jonction p-n est également une couche dissymétrique par rapport audit plan bissecteur, avec un bord (BB') en coïncidence avec celui de la seconde couche (C2) supérieure, et cette première couche inférieure (C1) s'étend sous la seconde couche (C2) avec une surface au moins égale à celle de cette dernière.

2. Dispositif selon la revendication 1, caractérisé en ce que, pour réaliser une structure de confinement du signal lumineux dans le premier guide de sortie (G'1) pour la transmission totale du signal lumineux d'entrée vers ce premier guide (G'1) en passif, le ruban de guidage est de section rectangulaire, et en ce qu'un sillon à faces parallèles est formé dans le ruban de guidage du second guide de sortie (G'2), à la jonction du premier et du second guides de sortie (G'1, G'2), par élimination du matériau de ce ruban de guidage sur toute sa hauteur, et avec une dimension transversale (d3) non nulle, perpendiculairement au plan des couches et parallèlement à l'axe de propagation du premier guide de sortie (G'1).

3. Dispositif selon la revendication 2, caractérisé en ce qu'il comprend une seconde hétérostructure, composée de la couche guidante (CG) et d'une couche supérieure en un matériau de confinement.

4. Dispositif selon l'une des revendications 1 à 3, caractérisé en ce que, le ruban de guidage est érigé au-dessus de l'hétérostructure.

5. Dispositif selon la revendication 3, caractérisé en ce que le ruban de guidage est constitué par un sillon formé dans le substrat, et empli de matériau de la couche guidante, la surface supérieure du dispositif étant alors planaire.

6. Dispositif selon l'une des revendications 1 à 5, caractérisé en ce que, la dimension transversale ($\underline{a}$) des guides est choisie pour permettre la propagation d'ondes monomodes, et l'angle de couplage ($2\theta$) est choisi en fonction de l'épaisseur ($e_G$) de la couche guidante (CG), de l'épaisseur (H) de la couche de confinement supérieure lorsqu'elle existe, de la hauteur (h) du ruban (RB) et de la composition des matériaux formant l'(les) hétérostructure(s), pour obtenir une différence d'indice $\Delta n$ entre l'indice effectif dans la région guidée et l'indice effectif dans les régions adjacentes, qui est $\Delta n$ comprise entre $10^{-2}$ et $10^{-3}$.

7. Dispositif selon la revendication 6, caractérisé en ce que l'(les) hétérostructure(s) comprend (comprennent) une couche quaternaire de composé III-V pour former la couche guidante (CG) et une (des) couche(s) binaire(s) de composé III-V pour former le substrat (S) et éventuellement la couche supérieure de confinement.

8. Dispositif selon la revendication 7, caractérisé en ce que le composé binaire est l'InP et le composé quaternaire est le $Ga_xIn_{1-x}As_y\,P_{1-y}$, où x et y sont les concentrations liées par la relation x = 0,435 y.

9. Dispositif selon la revendication 8, caractérisé en ce que la concentration
   y $\simeq$ 0,1 à 0,5
   la largeur du ruban (RB) de guidage
   $\underline{a} \simeq$ 3 à 5 $\mu$m
   l'épaisseur de la couche guidante $e_G \simeq$ 0,4 $\mu$m
   et l'angle de croisement
   $2\theta \simeq$ 2 à 6°.

10. Dispositif selon la revendication 9, caractérisé en ce que
    y $\simeq$ 0,5
    $\underline{a} \simeq$ 4 $\mu$m
    $\underline{2\theta} \simeq$ 4°

**11.** Dispositif selon l'une des revendications 9 ou 10, caractérisé en ce que la hauteur totale de cette couche au-dessus de la région guidée est :

$$H = h + e_3 \approx 1,0 \ \mu m$$

où h est la hauteur dont est érigé le ruban RB et où l'épaisseur ($e_3$) de la couche de confinement de part et d'autre du ruban est
$$e_3 \approx 0,25 \ \text{à} \ 0,60 \ \mu m$$

**12.** Dispositif selon la revendication 11, caractérisé en ce que la dimension transversale de la couche supérieure de la jonction p-n est $d_2 <$ $d_1$ dimension transversale de la couche inférieure de ladite jonction, et en ce que :
$$3 \ \mu m < d_2 < 8 \ \mu m \ \text{et en ce que l'épaisseur de la couche (C1) est de l'ordre de 1} \ \mu m.$$

**13.** Dispositif selon l'une des revendications précédentes, caractérisé en ce que des couches de contact ohmique sont disposées en surface des couches de type respectivement n et p, éventuellement au moyen d'ouvertures pratiquées dans les couches supérieures, selon une configuration de plots appropriée à permettre l'injection de porteurs de charges au centre de la couche de type p, et leur extraction de la couche de type n de manière symétrique par rapport à leur injection.

**14.** Dispositif selon l'une des revendications 6 à 13, caractérisé en ce que la dimension transversale ($d_3$) dudit sillon quand il existe, est prévue en coopération avec la valeur de l'angle de couplage ($2\theta$) et la valeur des paramètres des guides pour obtenir une extinction d'au moins 30 dB, sur la voie de sortie non utilisée, en passif.

**15.** Dispositif selon la revendication 14, caractérisé en ce que l'on choisit la valeur de la densité de courant dans la jonction p-n pour obtenir une extinction d'au moins 30 dB sur la voie de sortie non utilisée en actif, correspondant à une différence d'indice $\Delta n$ produite par la jonction, qui est $\Delta n$ de l'ordre de $1,4.10^{-2}$.

**16.** Dispositif selon l'une des revendications 1 à 15, caractérisé en ce que l'élément de commutation présente la forme d'un Y, ayant une seule entrée se faisant par le guide rectiligne (G1), ayant une première sortie se faisant en passif dans le premier guide rectiligne (G'1) en prolongement du guide d'entrée, ayant une seconde sortie se faisant en actif dans le second guide rectiligne (G'2) qui est couplé sous l'angle $2\theta$ avec le premier guide de sortie, la jonction p-n dissymétrique étant disposée selon un arrangement où sa surface s'étend sur la demi région délimitée par le plan bissecteur de l'angle de couplage $2\theta$, comprenant le premier guide de sortie (G'1).

**17.** Dispositif selon l'une des revendications 3 à 15 dans la mesure où celle-ci he dépend pas de la revendication 2, caractérisé en ce l'élément de commutation présente la forme d'un X, ayant une seconde entrée par un second guide d'entrée (G2), symétrique du premier guide d'entrée (G1) par rapport au plan bissecteur de l'angle $2\theta$, et dans l'alignement du second guide de sortie (G'2), pour l'introduction d'un second signal d'entrée non commutable qui se propage continuement vers le second guide de sortie (G'2) dans le prolongement de ce second guide d'entrée (G2).

**18.** Dispositif semiconducteur intégré incluant une matrice de commutation optique de N guides dans N guides, comportant, pour former cette matrice, N éléments de commutation en X selon la revendication 17, placés en quinconce, chaque élément étant disposé vis-à-vis des autres de manière telle que les voies transportant les signaux non commutables sont dans le prolongement les unes des autres, les voies transportant les signaux commutables sont dans le prolongement les unes des autres et les plans réflecteurs sont orientés de la même façon.

**19.** Dispositif semiconducteur intégré incluant une cellule unitaire de commutation de deux guides dans deux guides, dans lequel cellule est constituée de quatre éléments de commutation en Y selon la revendication 16, ces éléments étant disposés de manière telle que lesdits troisième et quatrième éléments sont raccordés tête-bêche respectivement avec lesdits premier et second éléments, lesdits premiers guides de sortie de chaque couple ainsi raccordé étant dans le prolongement l'un de l'autre et formant un guide rectiligne, les guides rectilignes de deux couples adjacents étant parallèles, et lesdits seconds guides de sortie des quatre éléments étant raccordés entre eux pour former deux guides rectilignes qui se croisent en X sous un angle $4\theta$, les jonctions p-n desdits premier et quatrième éléments d'une part, et les jonctions p-n desdits second et troisième éléments d'autre part étant reliées entre elles par des connexions électriques.

**20.** Dispositif semiconducteur intégré incluant une matrice de commutation de N guides dans N guides, dans lequel cette matrice est constituée de N(N-1)/2 cellules unitaires selon la revendication 19, disposées en quinconce, de manière à former N guides rectilignes reliés par les tronçons de guides rectilignes en X.

**21.** Procédé de réalisation d'un dispositif selon l'une des revendications 1 à 20, caractérisé en ce que pour réaliser l'alignement des masques définissant les régions n et p, on réalise des motifs d'alignement dans une partie non utilisée du circuit, en ce que l'on couvre ces motifs d'une couche diélectrique par exemple $SiO_2$, et en ce que l'on utilise comme méthode de croissance des couches la croissance en phase vapeur (VPE), ce qui résulte dans le fait que ces motifs restent apparents durant tout le procédé mettant en oeuvre la croissance épitaxiale (VPE), et facilite le positionnement des masques dans les différentes phases d'exécution.

**Claims**

**1.** An integrated semiconductor device including at least one optoelectronic switching element, this element comprising at least one heterostructure of layers of III-V material including a substrate (S) and a guiding layer (CG) for forming light waveguides with a guiding strip (RB), with:
- at least one rectilinear input guide (G1) for the introduction of a light signal,
- a first rectilinear output guide (G'1) in the extended direction of the input guide (G1),
- a second rectilinear output guide (G'2) coupled to the first output guide (G'1) so as to enclose with the latter a given angle ($2\theta$) in a so-called switching region, said element in addition comprising in said switching region for forming an element for reflecting a signal towards the second input guide G'2:
- a p-n junction formed by a first layer (C1) or lower layer of a first conductivity type, and by a second layer (C2) or upper layer of the opposed conductivity type, arranged on either side of the guiding layer so as to adjoin the latter, the second, upper layer (C2) extending asymmetrically relative to the longitudinal bisecting plane (YY') of the angle ($2\theta$) of the output guides (G'1, G'2), over half the region defined by this plane which comprises the first output guide (G'1), this upper layer C2 having an edge (BB') which coincides with said bisecting plane and having a dimension in this longitudinal direction which is equal to or greater than twice that of the switching region, while projecting substantially symmetrically beyond said switching region on either side, characterized in that, in order to realise a current-limiting structure which causes the reflection element to coincide exactly with said bisecting plane and a total reflection of the input signal towards the second output guide (G'2) in the active state, the first, lower layer (C1) of the p-n junction is also an asymmetrical layer relative to said bisecting plane, with an edge (BB') which coincides with that of the second, upper layer (C2), and in that this first, lower layer (C1) extends below the second layer (C2) over a surface area which is at least equal to that of the latter.

**2.** A device as claimed in Claim 1, characterized in that, in order to realise a confinement structure for the light signal in the first output guide (G'1) for the total transmission of the input light signal towards this first guide (G'1) in the passive mode, the guiding strip is of rectangular cross-section, and in that a grave having parallel surfaces is formed in the guiding strip of the second output guide (G'2) at the junction of the first and the second output guides (G'1, G'2), through elimination of the material of this guiding strip over its full height, and with a transverse dimension (d3) not equal to zero, perpendicularly to the plane of the layers and parallel to the axis of propagation of the first output guide (G'1).

**3.** A device as claimed in Claim 2, characterized in that it comprises a second heterostructure composed of the guiding layer $C_G$ and of an upper layer of a confinement material.

**4.** A device as claimed in any one of the Claims 1 to 3, characterized in that the guiding strip is raised above the heterostructure.

**5.** A device as claimed in Claim 3, characterized in that the guiding strip is constituted by a groove formed in the substrate and filled with material of the guiding layer, the upper surface of the device then being planar.

**6.** A device as claimed in any one of the Claims 1 to 5, as far as dependent upon Claim 3, characterized in that, the transverse dimension (a) of the guides is chosen so as to permit the propagation of monomode waves, the coupling angle (2Θ) is chosen as a function of the thickness $e_G$ of the guiding layer $C_G$, of the thickness (H) of the upper confinement layer when it exists, of the height (h) of the strip (RB) and of the composition of the materials forming the heterostructure(s) for obtaining an index difference $\Delta n$ between the effective index in the guided region and the effective index in the adjacent regions, $\Delta n$ lying between $10^{-2}$ and $10^{-3}$.

7. A device as claimed in Claim 6, characterized in that the heterostructure(s) comprise(s) a quaternary layer of a III-V compound to form the guiding layer ($C_G$) and a (or one of the) binary layer(s) of a III-V compound to form the substrate (S) and, as the case may be, the upper confinement layer.

8. A device as claimed in Claim 7, characterized in that the binary compound is InP and the quaternary compound is $Ga_xIn_{1-x}As_yP_{1-y}$, where the concentrations x and y follow the relation $x = 0.435\ y$.

9. A device as claimed in Claim 8, as far as dependent upon Claim 4, characterized in that the concentration
   $y \approx 0.1$ to $0.5$
   the width of the guiding strip (RB)
   $a \approx 3$ to $5\ \mu m$
   the thickness of the guiding layer
   $e_G \approx 0.4\ \mu m$
   and the crossing angle
   $2\theta \approx 2$ to $6°$.

10. A device as claimed in Claim 9, characterized in that
    $y \approx 0.5$
    $a \approx 4\ \mu m$
    $2\theta \approx 4°$.

11. A device as claimed in one of the Claims 9 and 10, characterized in that the overall height of this layer above the guided region is

    $H = h + e_3 \approx 1.0\ \mu m$

    where h is the height by which the strip RB is raised and where the thickness ($e_3$) of the confinement layer on either side of the strip is
    $e_3 \approx 0.25$ to $0.60\ \mu m$.

12. A device as claimed in Claim 11, characterized in that the transverse dimension of the upper layer of the p-n junction is $d_2 < d_1$, i.e. the transverse dimension of the lower layer of the said junction, and in that
    $3\ \mu m < d_2 < 8\ \mu m$,
    and in that the thickness of the layer ($C_1$) is of the order of $1\ \mu m$.

13. A device as claimed in any one of the preceding Claims, characterized in that ohmic contact layers are arranged at the surface of the layers of the n- and p-type, respectively, as the case may be by means of openings provided in the upper layer, in a configuration of pads suitable for permitting the injection of charge carriers at the centre of the p-type layer and their extraction from the n-type layer symmetrically with respect to their injection.

14. A device as claimed in any of the Claims 6 to 13, characterized in that the transverse dimension ($d_3$) of the said groove, if present, is chosen in cooperation with the value of the coupling angle ($2\theta$) and the values of the parameters of the guides so as to obtain an extinction of at least 30 dB in the unused path in the passive mode.

15. A device as claimed in Claim 14, characterized in that the value of the current density in the p-n junction is chosen so as to obtain an extinction of at least 30 dB in the unused path in the active mode, corresponding $\Delta n$ to an index difference produced by the junction of the order of $1.4 \cdot 10^{-2}$.

16. A device as claimed in any one of Claims 1 to 15, characterized in that the switching element has the shape of a Y having a single input formed by the rectilinear guide (G1), having a first output in the passive mode formed in the first rectilinear guide (G'1) in the extension of the input guide, and having a second output in the active mode formed in the second rectilinear guide (G'2) enclosing the angle $2\theta$ with the first output guide, the asymmetrical p-n junction being arranged such that its surface extends over half the region defined by the bisecting plane of the coupling angle $2\theta$, comprising the first output guide (G'1).

17. A device as claimed in any one of the Claims 3 to 15 to the extent to which it is not dependent on Claim 2, characterized in that the switching element has the shape of an X having a second input through a second input guide (G2) symmetrical with the first input guide (G1) relative to the bisecting plane of the angle $2\theta$ and in line with the second output guide (G'2) for the introduction of a second, non-switchable input signal which is propagated in line towards the second output guide (G'2) in the extended direction of this second input guide (G2).

18. An integrated semiconductor device including an optical switching matrix of N by N guides, comprising, for forming this matrix, N switching elements as claimed in Claim 17 arranged in a staggered disposition, each element being arranged with respect to the other elements in such a manner that the paths transporting the non-switchable signals are in line with each other, the paths transporting the switchable signals are in line with each other, and the reflecting planes are oriented in the same manner.

19. An integrated semiconductor device including a switching cell unit of two by two guides, wherein this cell is constituted by four Y-shaped switching elements as claimed in Claim 6, these elements being arranged in such a manner that the said third and fourth elements are joined by the front and the back to the first and second elements, respectively, the said first output guides of each pair thus joined together being arranged so as to be in line with each other and forming a rectilinear guide, the rectilinear guides of two adjacent pairs being parallel to each other and the said second output guides of the four elements being joined to each other to form two rectilinear guides which cross each other at X at an angle $4\theta$, the p-n junctions of the said first and fourth elements on the one hand and the p-n junction of the said second and third elements on the other hand being connected to each other through electrical connections.

20. An integrated semiconductor device including a switching matrix of N by N guides, wherein this matrix is constituted by N(N-1)/2 cell units as claimed in Claim 19 arranged in staggered disposition so as to form N rectilinear guides interconnected through the rectilinear guide portions in the shape of an X.

21. A method of manufacturing a device as claimed in any one of the Claims 1 to 20, characterized in that, in order to obtain the alignment of the masks defining the n- and p-type layers, alignment patterns are formed in an unused part of the circuit, in that these patterns are covered by a dielectric layer, for example $SiO_2$, and in that the method of growth used for the layers is the vapour phase epitaxy (VPE) growth m, which results in that these patterns remain in tact during the whole method utilizing the epitaxial VPE growth and facilitates the positioning of the masks in the various production stages.

## Patentansprüche

1. Integrierte Halbleiteranordnung mit mindestens einem optoelektronischen Schaltelement, das mindestens eine Heterostruktur von Schichten von III-V-Materialien mit einem Substrat (S) und einer Wellenleiterschicht ($C_G$) umfaßt, um Lichtwellenleiter mit einem Wellenleiterstreifen (RB) zu bilden, worunter:

   - mindestens ein geradliniger Eingangsleiter ($G_1$), um ein Lichtsignal in das Schaltelement einzuspeisen;
   - ein erster geradliniger Ausgangsleiter ($G'_1$) in der Verlängerung des Eingangsleiters ($G_1$);
   - ein zweiter geradliniger Ausgangsleiter ($G'_2$), der mit dem ersten Ausgangsleiter ($G'_1$) gekoppelt ist, wobei er mit letzterem in einer sogenannten Schaltzone einen gegebenen Winkel ($2\theta$) bildet, wobei dieses Element in dieser Schaltzone zum Bilden eines Elements zur Reflexion des Signals zum zweiten Ausgangsleiter ($G'_2$) außerdem folgendes umfaßt:
   - einen pn-Übergang, der aus einer ersten Schicht ($C_1$), der sog. unteren Schicht, eines ersten Leitungstyps und aus einer zweiten Schicht ($C_2$), der sog. oberen Schicht, des entgegengesetzten Leitungstyps gebildet ist, die beiderseits der Wellenleiterschicht liegen und an diese grenzen, wobei die zweite obere Schicht ($C_2$) sich asymmetrisch in bezug auf die längs verlaufende Ebene (YY'), die den Winkel ($2\theta$) der Ausgangsleiter ($G'_1$) und ($G'_2$) halbiert, über den von dieser Ebene begrenzten halben Bereich erstreckt, der den Ausgangsleiter ($G'_1$) umfaßt, wobei diese obere Schicht ($C_2$) einen Rand (BB') hat, der mit der winkelhalbierenden Ebene zusammenfällt und eine Abmessung in dieser Längsrichtung hat, die gleich oder größer ist als die doppelte Abmessung der Schaltzone und symmetrisch zu beiden Seiten merklich über diese Schaltzone hinausreicht, dadurch gekennzeichnet, daß, zur Erzeugung einer Struktur zur Strombegrenzung, die das Reflexionselement im aktiven Zustand genau mit der genannten winkelhalbierenden Ebene zusammenfallen läßt, und für die Totalreflexion des Eingangssignals zum zweiten Ausgangslei-

ter $(G'_2)$, die erste untere Schicht $(C_1)$ des pn-Übergangs ebenfalls asymmetrisch in bezug auf die genannte winkelhalbierende Ebene ist und einen Rand $(BB')$ aufweist, der mit dem Rand der zweiten oberen Schicht $(C_2)$ zusammenfällt, und sich diese erste untere Schicht $(C_1)$ unterhalb der Schicht $(C_2)$ über eine mindestens gleich große Fläche wie die der letzteren Schicht erstreckt.

2. Anordnung nach Anspruch 1, dadurch gekennzeichnet, daß, zur Erzeugung einer Struktur zum Eingrenzen des Lichtsignals im ersten Ausgangsleiter $(G'_1)$, für die vollständige Übertragung des Eingangslichtsignals an diesen Ausgangsleiter $(G'_2)$ im inaktiven Zustand der Wellenleiterstreifen einen rechteckigen Querschnitt aufweist, und daß in dem Wellenleiterstreifen des zweiten Ausgangsleiters $(G'_2)$ an der Verbindungsstelle des ersten und des zweiten Ausgangsleiters $(G'_1, G'_2)$ eine Furche mit parallelen Seitenwänden durch Entfernung von Material dieses Wellenleiterstreifens über dessen gesamte Höhe und mit einer Querabmessung $(d_3)$, die ungleich Null ist, gebildet ist, senkrecht zur Schichtebene und parallel zur Lichtausbreitungsachse des ersten Ausgangsleiters $(G'_1)$.

3. Anordnung nach Anspruch 2, dadurch gekennzeichnet, daß sie eine zweite Heterostruktur enthält, die aus der Wellenleiterschicht $(C_G)$ und einer oberen Schicht aus einem Eingrenzungsmaterial zusammengesetzt ist.

4. Anordnung nach einem der Ansprüche 1 bis 3, dadurch gekennzeichnet, daß der Wellenleiterstreifen aus der Heterostruktur herausragt.

5. Anordnung nach Anspruch 3, dadurch gekennzeichnet, daß der Wellenleiterstreifen aus einer Furche im Substrat besteht, die mit dem Material der Wellenleiterschicht aufgefüllt ist, wobei dann die Oberfläche der Anordnung eben ist.

6. Anordnung nach einem der Ansprüche 1 bis 5, dadurch gekennzeichnet, daß die Querabmessung (a) der Lichtwellenleiter so gewählt wird, daß die Ausbreitung von Monomodewellen möglich ist, und daß der Kopplungswinkel $(2\theta)$ in Abhängigkeit von der Dicke $(e_G)$ der Wellenleiterschicht $(C_G)$, von der Dicke (H) der oberen Eingrenzungsschicht, sowie sie vorhanden ist, von der Höhe (h) des Wellenleiterstreifens (RB) und von der Materialzusammensetzung der Heterostruktur(en) so gewählt wird, daß eine Differenz $\Delta n$ des Brechungsindex zwischen effektivem Brechungsindex in dem Führungsbereich und effektivem Brechungsindex der benachbarten Schichten erreicht wird, so daß $\Delta n$ zwischen $10^{-2}$ und $10^{-3}$ liegt.

7. Anordnung nach Anspruch 6, dadurch gekennzeichnet, daß die Heterostruktur(en) eine quaternäre Schicht aus einer III-V-Verbindung zur Bildung der Wellenleiterschicht $(C_G)$ und eine (oder mehrere) binäre Schicht(en) aus einer III-V-Verbindung zur Bildung (S) des Substrats und gegebenenfalls der oberen Eingrenzungsschicht enthält (bzw. enthalten).

8. Anordnung nach Anspruch 7, dadurch gekennzeichnet, daß die binäre Verbindung InP ist und die quaternäre Verbindung $Ga_xIn_{1-x}As_yP_{1-y}$, wobei x und y die jeweiligen Konzentrationen bezeichnen, mit der Beziehung $x = 0,435\ y$.

9. Anordnung nach Anspruch 8, dadurch gekennzeichnet, daß die Konzentration
$$y \cong 0,1\ \text{bis}\ 0,5$$
daß die Breite des Wellenleiterstreifens (RB)
$$a \cong 3\ \text{bis}\ 5\ \mu m$$
daß die Dicke der Wellenleiterschicht
$$e_G \cong 0,4\ \mu m$$
und daß der Kreuzungswinkel
$$2\theta \cong 2°\ \text{bis}\ 6°$$
ist.

10. Anordnung nach Anspruch 9, dadurch gekennzeichnet, daß
$$y \cong 0,5$$
$$a \cong 4\ \mu m$$
$$2\theta \cong 4°$$
ist.

11. Anordnung nach einem der Ansprüche 9 oder 10, dadurch gekennzeichnet, daß die Gesamthöhe dieser Schicht oberhalb des Führungsbereichs
$$H = h + e_3 \cong 1,0\ \mu m$$
ist, wobei (h) die Höhe ist, um die der Wellenleiterstreifen (RB) herausragt, und wobei die Dicke $(e_3)$ der Eingrenzungsschicht beiderseits des Wellenleiterstreifens
$$e_3 \cong 0,25\ \text{bis}\ 0,6\ \mu m$$
ist.

12. Anordnung nach Anspruch 11, dadurch gekennzeichnet, daß die Querabmessung der oberen Schicht des pn-Übergangs $d_2 < d_1$ ist, d.h. kleiner als die Querabmessung der unteren Schicht des genannten Übergangs, daß

3 μm< $d_2$ < 8 μm
und daß die Dicke der Schicht ($C_1$) in der Größenordnung von 1 μm liegt.

13. Anordnung nach einem der vorhergehenden Ansprüche, dadurch gekennzeichnet, daß die ohmschen Kontaktschichten an der Oberfläche der n- bzw. p-Schichten gegebenenfalls mittels Öffnungen in den oberen Schichten aufgebracht sind, entsprechend einer geeigneten Konfiguration von Kontaktflächen, um die Injektion der Ladungsträger in die Mitte der p-Schicht und symmetrisch zu ihrer Injektion ihre Extraktion aus der n-Schicht zu ermöglichen.

14. Anordnung nach einem der Ansprüche 6 bis 13, dadurch gekennzeichnet, daß die Querabmessung ($d_3$) der genannten Furche, soweit eine solche vorhanden ist, im Zusammenwirken mit dem Kopplungswinkel ($2\theta$) und den Werten der Lichtwellenleiter-Parameter vorgesehen wird, um im inaktiven Zustand in dem nicht benutzten Ausgangskanal eine Dämpfung von mindestens 30 dB zu erreichen.

15. Anordnung nach Anspruch 14, dadurch gekennzeichnet, daß der Wert der Stromdichte im pn-Übergang gewählt wird, um im aktiven Zustand in dem nicht benutzten Ausgangskanal eine Dämpfung von mindestens 30 dB zu erreichen, entsprechend einer durch den pn-Übergang hervorgerufenen Differenz $\Delta n$ des Brechungsindex, die in der Größenordnung von $\Delta n \cong 1,4 \cdot 10^{-2}$ liegt.

16. Anordnung nach einem der Ansprüche 1 bis 15, dadurch gekennzeichnet, daß das Schaltelement die Form eines Y hat, mit einem einzigen Eingang über den geradlinigen Lichtwellenleiter ($G_1$), mit einem ersten Ausgang im inaktiven Zustand über den ersten geradlinigen Lichtwellenleiter ($G'_1$) in Verlängerung des Eingangsleiters und mit einem zweiten Ausgang im aktiven Zustand über den zweiten geradlinigen Lichtwellenleiter ($G'_2$), der mit dem ersten Ausgangsleiter unter einem Winkel von $2\theta$ gekoppelt ist, wobei der asymmetrische pn-Übergang so angeordnet ist, daß seine Oberfläche sich über den halben Bereich erstreckt, der von der den Kopplungswinkel ($2\theta$) halbierenden Ebene begrenzt wird und der den ersten Ausgangsleiter ($G'_1$) enthält.

17. Anordnung nach einem der Ansprüche 3 bis 15, soweit dieser nicht von Anspruch 2 abhängt, dadurch gekennzeichnet, daß das Schaltelement die Form eines X aufweist, mit einem zweiten Eingang über einen zweiten geradlinigen Lichtwellenleiter ($G_2$), symmetrisch zum ersten Eingangsleiter ($G_1$) in bezug zu der den Winkel $2\theta$ halbierenden Ebene und in der Verlängerung des zweiten Ausgangsleiters ($G'_2$) gelegen, zur Einspeisung eines zweiten, nicht schaltbaren Eingangssignals, das sich kontinuierlich zum zweiten, in der Verlängerung des zweiten Eingangsleiters ($G_2$) gelegenen Ausgangsleiter ($G'_2$) hin ausbreitet.

18. Integrierte Halbleiteranordnung mit einer optischen Schaltmatrix von N Lichtwellenleitern in N Lichtwellenleiter, die, um diese Matrix zu bilden, N X-förmige Schaltelemente nach Anspruch 17 enthält, die rautenförmig angeordnet sind, wobei jedes Element gegenüber den anderen so angeordnet ist, daß die Kanäle für die nicht schaltbaren Signale jeweils in Verlängerung zueinander liegen, die Kanäle für die schaltbaren Signale jeweils in Verlängerung zueinander liegen, und die Reflexionsebenen in gleicher Weise orientiert sind.

19. Integrierte Halbleiteranordnung mit einer Einheitsschaltzelle für die Schaltung von zwei Lichtwellenleitern in zwei Lichtwellenleiter, bei der diese Zelle aus vier Y-förmigen Schaltelementen nach Anspruch 16 besteht, wobei diese Schaltelemente so angeordnet sind, daß die genannten dritten und vierten Schaltelemente kopfüber mit den jeweiligen ersten und zweiten Schaltelementen verbunden sind, wobei die ersten Ausgangsleiter jedes so verbundenen Paares in Verlängerung zueinander liegen und einen geradlinigen Lichtwellenleiter bilden, wobei die Lichtwellenleiter zweier benachbarter Paare parallel zueinander sind, und wobei die genannten zweiten Ausgangsleiter der vier Schaltelemente so miteinander verbunden sind, daß sie zwei geradlinige, sich X-förmig unter einem Winkel $4\theta$ kreuzende Lichtwellenleiter bilden, und wobei die pn-Übergänge der genannten ersten und vierten Schaltelemente einerseits und die pn-Übergänge der genannten zweiten und dritten Schaltelemente andererseits durch elektrische Verbindungen miteinander verbunden sind.

20. Integrierte Halbleiteranordnung mit einer Schaltmatrix von N Lichtwellenleitern in N Lichtwellenleiter, bei der diese Matrix aus N(N-1)/2 Einheitsschaltzellen nach Anspruch 19 besteht, die rautenförmig so angeordnet sind, daß N geradlinige, untereinander durch die X-förmigen Lichtwellenleiterabschnitte verbundene Lichtwellenleiter gebildet werden.

21. Herstellungsverfahren für eine Anordnung nach einem der Ansprüche 1 bis 20, dadurch gekennzeichnet, daß für die Justierung der Masken, mit denen die n- und p-Bereiche festgelegt werden, in einem unbenutzten Bereich der Schaltung Justiermarken angebracht werden, daß diese Marken mit einer dielektrischen Schicht, zum Beispiel aus $SiO_2$, bedeckt werden, und daß als Aufwachsverfahren für die Schichten Gasphasenepitaxie (VPE) verwendet wird, was dazu führt, daß diese Marken während des gesamten Verfahrens des epitaktischen Aufwachsens (VPE) sichtbar bleiben und die Positionierung der Masken in den verschiedenen Arbeitsschritten vereinfacht wird.

FIG.1a

FIG.1b

FIG. 1c

26

FIG. 1d

FIG. 1e

FIG. 2a

FIG. 2b

FIG. 2c

FIG. 2d

FIG. 2e

FIG. 3a

FIG. 3c

FIG.3b

EP 0 370 577 B1

FIG.3d

33

FIG. 4a

FIG. 4b

FIG. 4 c

FIG. 4 d

FIG. 4e

FIG. 4f

FIG. 5a

FIG.5b

FIG.5c